(19) Europäisches Patentamt
European Patent Office
Office européen des brevets

(11) **EP 4 663 406 A1**

(12) **EUROPEAN PATENT APPLICATION**
published in accordance with Art. 153(4) EPC

(43) Date of publication:
**17.12.2025 Bulletin 2025/51**

(21) Application number: **24753399.5**

(22) Date of filing: **07.02.2024**

(51) International Patent Classification (IPC):
**B32B 27/32** (2006.01)  **B32B 7/022** (2019.01)
**B32B 7/027** (2019.01)  **B32B 7/12** (2006.01)
**B32B 27/00** (2006.01)  **B65D 33/00** (2006.01)
**B65D 65/40** (2006.01)  **C08J 7/00** (2006.01)
**C08J 7/043** (2020.01)  **C08J 7/048** (2020.01)

(52) Cooperative Patent Classification (CPC):
**B32B 7/022; B32B 7/027; B32B 7/12; B32B 27/00;
B32B 27/32; B65D 33/00; B65D 65/40; C08J 7/00;
C08J 7/043; C08J 7/048**

(86) International application number:
**PCT/JP2024/004176**

(87) International publication number:
**WO 2024/166956 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 08.02.2023  JP 2023017900
08.02.2023  JP 2023017907
09.08.2023  JP 2023130451
09.08.2023  JP 2023130456
27.09.2023  JP 2023166474
28.09.2023  JP 2023167754
20.10.2023  JP 2023180690

(71) Applicant: **Dai Nippon Printing Co., Ltd.**
**Tokyo 162-8001 (JP)**

(72) Inventors:
• **NAKATA Mariko**
**Tokyo 162-8001 (JP)**

• **HASEGAWA Takayuki**
**Tokyo 162-8001 (JP)**
• **TAKUSHIMA Kazuhiro**
**Tokyo 162-8001 (JP)**
• **KONO Shinichiro**
**Tokyo 162-8001 (JP)**
• **MORIMOTO Taro**
**Tokyo 162-8001 (JP)**
• **KOICHI Chisayo**
**Tokyo 162-8001 (JP)**
• **ONO Yoshiyuki**
**Tokyo 162-8001 (JP)**
• **TAKAHASHI Hideaki**
**Tokyo 162-8001 (JP)**
• **ISHIKAWA Shun**
**Tokyo 162-8001 (JP)**
• **SHIMIZU Reiko**
**Tokyo 162-8001 (JP)**

(74) Representative: **Müller-Boré & Partner
Patentanwälte PartG mbB
Friedenheimer Brücke 21
80639 München (DE)**

(54) **LAMINATE AND PACKAGING BAG**

(57)    A laminate including a first substrate, a first adhesive layer, a second substrate, a second adhesive layer, and a sealant layer in this order in a thickness direction, wherein the first substrate includes a polypropylene stretched substrate, the second substrate includes a polypropylene stretched substrate, the sealant layer contains polypropylene as a main component, the first adhesive layer has a modulus of elasticity of 30.0 MPa or more, and the first adhesive layer has a thickness of 0.5 $\mu$m or more and 3.0 $\mu$m or less.

EP 4 663 406 A1

**Description**

Technical Field

The present disclosure relates to a laminate and a packaging bag.

Background Art

Polyester films have good mechanical characteristics, chemical stability, heat resistance, and transparency, and are inexpensive. Thus, polyester films have been conventionally used as substrates constituting laminates used for producing packaging bags. Depending on the contents to be filled in a packaging bag, the packaging bag is required to have gas barrier properties, such as oxygen barrier properties. To satisfy this requirement, an inorganic oxide layer containing alumina, silica, or the like is formed on a surface of a polyester film (see, for example, Patent Literature 1). In recent years, alternative substrates to polyester films have been sought.

Citation List

Patent Literature

PTL 1: Japanese Unexamined Patent Application Publication No. 2005-053223

Summary of Invention

Technical Problem

The present inventors have studied the use of a stretched substrate containing polypropylene as a main component instead of a known polyester film as a substrate constituting a laminate. More specifically, from the perspective of recyclability, the present inventors have studied the use of a laminate that includes the stretched substrate and a sealant layer containing polypropylene as a main component. On the basis of study results, the present inventors have found that such a laminate may have poor tearability, and a packaging bag produced using the laminate may have poor openability.
An object of the present disclosure is to improve the tearability of a laminate including a stretched substrate containing polypropylene as a main component and a sealant layer containing polypropylene as a main component.

Solution to Problem

A laminate according to the present disclosure includes a first substrate, a first adhesive layer, a second substrate, a second adhesive layer, and a sealant layer in this order in a thickness direction, wherein the first substrate includes a stretched substrate containing polypropylene as a main component, the second substrate includes a stretched substrate containing polypropylene as a main component, the sealant layer contains polypropylene as a main component, a cross section of the first adhesive layer has a modulus of elasticity of 30.0 MPa or more as measured with an atomic force microscope (AFM), and the first adhesive layer has a thickness of 0.5 $\mu$m or more and 3.0 $\mu$m or less.

Advantageous Effects of Invention

The present disclosure can improve the tearability of a laminate that includes a barrier substrate including a stretched substrate containing polypropylene as a main component and an inorganic oxide layer and that includes a sealant layer containing polypropylene as a main component.

Brief Description of Drawings

[Fig. 1] Fig. 1 is a schematic cross-sectional view of one embodiment of a laminate.
[Fig. 2] Fig. 2 is a schematic cross-sectional view of one embodiment of a laminate.
[Fig. 3] Fig. 3 is a schematic cross-sectional view of one embodiment of a laminate.
[Fig. 4] Fig. 4 is a schematic cross-sectional view of one embodiment of a laminate.
[Fig. 5] Fig. 5 is a schematic cross-sectional view of one embodiment of a laminate.
[Fig. 6] Fig. 6 is a schematic cross-sectional view of one embodiment of a laminate.

[Fig. 7] Fig. 7 is a schematic cross-sectional view of one embodiment of a laminate.
[Fig. 8] Fig. 8 is a schematic cross-sectional view of one embodiment of a laminate.
[Fig. 9] Fig. 9 is a schematic cross-sectional view of one embodiment of a laminate.
[Fig. 10] Fig. 10 is a schematic cross-sectional view of one embodiment of a laminate.
[Fig. 11] Fig. 11 is a schematic cross-sectional view of one embodiment of a laminate.
[Fig. 12] Fig. 12 is a schematic cross-sectional view of one embodiment of a laminate.
[Fig. 13] Fig. 13 is a schematic cross-sectional view of one embodiment of a laminate.
[Fig. 14] Fig. 14 is a schematic cross-sectional view of one embodiment of a laminate.
[Fig. 15] Fig. 15 is a schematic cross-sectional view of one embodiment of a laminate.
[Fig. 16] Fig. 16 is a schematic cross-sectional view of one embodiment of a laminate.
[Fig. 17] Fig. 17 is a schematic cross-sectional view of one embodiment of a laminate.
[Fig. 18] Fig. 18 is a front view of one embodiment of a packaging bag.
[Fig. 19] Fig. 19 is a perspective view of one embodiment of a packaging bag.
[Fig. 20] Fig. 20 is a schematic front view of one embodiment of a laminate in which a notch portion is formed.

Description of Embodiments

In the present description, when a plurality of upper limit candidates and a plurality of lower limit candidates are described for a certain parameter, any one upper limit candidate and any one lower limit candidate may be combined to configure the numerical range of the parameter. For example, an explanation will be given to the phrase "The parameter B is preferably A1 or more, more preferably A2 or more, still more preferably A3 or more, and is preferably A4 or less, more preferably A5 or less, still more preferably A6 or less." In this example, the numerical range of the parameter B may be A1 or more and A4 or less, A1 or more and A5 or less, A1 or more and A6 or less, A2 or more and A4 or less, A2 or more and A5 or less, A2 or more and A6 or less, A3 or more and A4 or less, A3 or more and A5 or less, or A3 or more and A6 or less.

Embodiments of the present disclosure will be described in detail below. The present disclosure may be embodied in many different forms and should not be construed as being limited to the description of the embodiments exemplified below. In the drawings, to make the description clearer, the width, thickness, shape, and the like of each layer may be schematically illustrated compared to the embodiments; however, these are merely examples and do not limit the interpretation of the present disclosure. In the present description and each drawing, the same reference numerals and letters are given to the same elements as those already described with reference to the preceding drawings, and detailed description thereof may be omitted as appropriate.

As used herein, the term "main component" in a given layer or substrate refers to a component that constitutes more than 50% by mass, preferably 60% by mass or more, more preferably 70% by mass or more, still more preferably 80% by mass or more, of the layer or substrate.

In the following description, each component (for example, polypropylene, $\alpha$-olefin, a resin material, an additive agent, a gas barrier resin, an adhesive resin, and an inorganic oxide) may be used alone or in combination of two or more types thereof.

[Laminate]

A laminate according to the present disclosure includes a first substrate, a first adhesive layer, a second substrate, a second adhesive layer, and a sealant layer in this order in a thickness direction (hereinafter also referred to as "in this order").

The first substrate includes a stretched substrate containing polypropylene as a main component. The second substrate includes a stretched substrate containing polypropylene as a main component. The stretched substrate of the first substrate and the stretched substrate of the second substrate may be the same or different. In the following description, the stretched substrate containing polypropylene as a main component is also referred to as a "polypropylene stretched substrate".

The sealant layer contains polypropylene as a main component.

At least one selected from the first substrate and the second substrate may be a barrier substrate including the stretched substrate and an inorganic oxide layer.

In one embodiment of a laminate according to the present disclosure, the first substrate is a polypropylene stretched substrate, and the second substrate is a polypropylene stretched substrate. That is, the laminate includes a first polypropylene stretched substrate, an optional print layer, a first adhesive layer, a second polypropylene stretched substrate, a second adhesive layer, and a sealant layer in this order. In this embodiment, the laminate includes no barrier substrate.

In one embodiment of a laminate according to the present disclosure, the first substrate is a polypropylene stretched substrate, and the second substrate is a barrier substrate. That is, the laminate includes a polypropylene stretched substrate, an optional print layer, a first adhesive layer, a barrier substrate, a second adhesive layer, and a sealant layer in this order. In this embodiment, the barrier substrate is preferably disposed such that the inorganic oxide layer faces the first adhesive layer and the polypropylene stretched substrate faces the second adhesive layer. Such an arrangement can further suppress, for example, degradation or the like of the inorganic oxide layer.

In one embodiment of a laminate according to the present disclosure, the first substrate is a barrier substrate, and the second substrate is a polypropylene stretched substrate. That is, the laminate includes a barrier substrate, an optional print layer, a first adhesive layer, a polypropylene stretched substrate, a second adhesive layer, and a sealant layer in this order. In this embodiment, the barrier substrate is preferably disposed such that the inorganic oxide layer faces the first adhesive layer and the polypropylene stretched substrate faces the outside.

In one embodiment, a laminate according to the present disclosure has good gas barrier properties (for example, oxygen barrier properties and water vapor barrier properties, particularly oxygen barrier properties). A packaging bag produced using a laminate according to the present disclosure can suppress the deterioration of gas barrier properties even after heat treatment, such as retort treatment or boiling treatment. A laminate in which the first substrate is a polypropylene stretched substrate and the second substrate is a barrier substrate is preferred from the perspective of more appropriately protecting the inorganic oxide layer when subjected to a heat treatment and stabilizing the gas barrier properties.

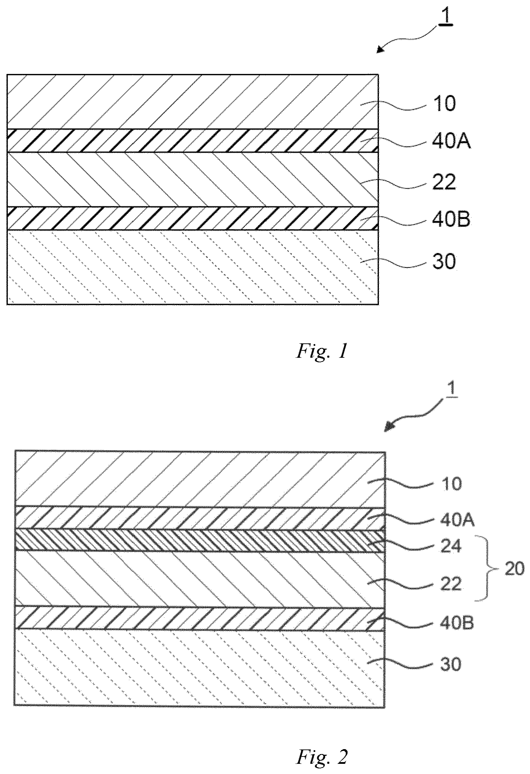

Figs. 1 to 17 are schematic cross-sectional views illustrating one embodiment of a laminate according to the present disclosure.

A laminate 1 illustrated in Fig. 1 includes a polypropylene stretched substrate 10 as a first substrate, a first adhesive layer 40A, a polypropylene stretched substrate 22 as a second substrate, a second adhesive layer 40B, and a sealant layer 30 in this order.

A laminate 1 illustrated in Fig. 2 includes the polypropylene stretched substrate 10 as a first substrate, the first adhesive layer 40A, a barrier substrate 20 as a second substrate, the second adhesive layer 40B, and the sealant layer 30 in this order. The barrier substrate 20 includes a polypropylene stretched substrate 22 and an inorganic oxide layer 24. In this example, the barrier substrate 20 is disposed such that the polypropylene stretched substrate 22 faces the second adhesive layer 40B and the inorganic oxide layer 24 faces the first adhesive layer 40A.

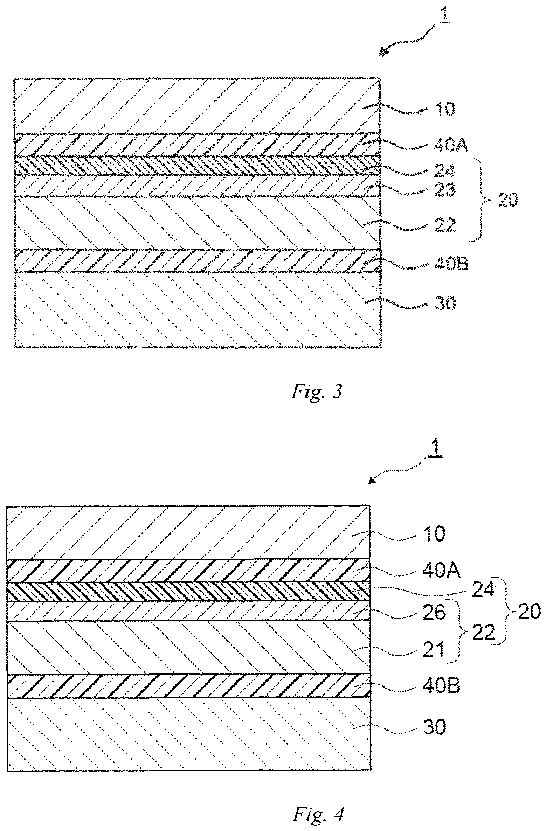

Fig. 3 is the same as Fig. 2 except that the barrier substrate 20 includes a surface coating layer 23 between the polypropylene stretched substrate 22 and the inorganic oxide layer 24.

Fig. 4 is the same as Fig. 2 except that the polypropylene stretched substrate 22 includes a polypropylene layer 21 and a surface resin layer 26.

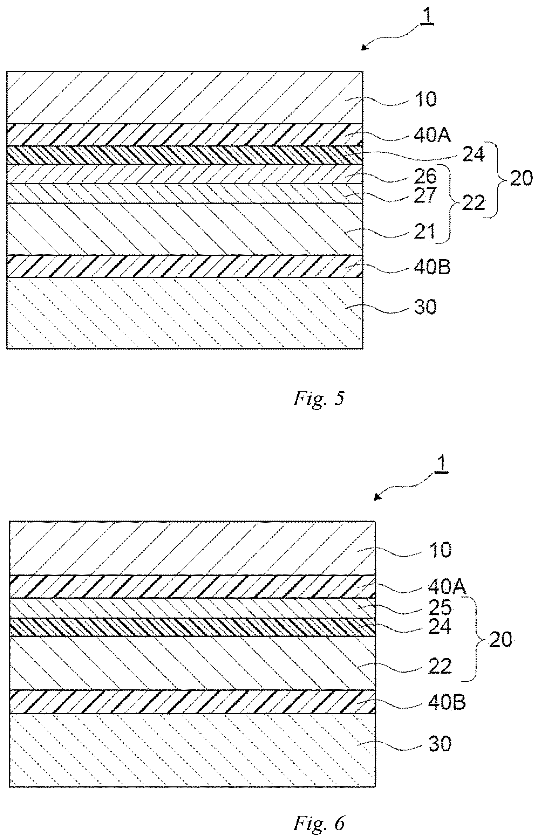

Fig. 5 is the same as Fig. 4 except that the polypropylene stretched substrate 22 includes an adhesive resin layer 27 between the polypropylene layer 21 and the surface resin layer 26.

Fig. 6 is the same as Fig. 2 except that the barrier substrate 20 includes the polypropylene stretched substrate 22, the inorganic oxide layer 24, and a covering layer 25 in this order.

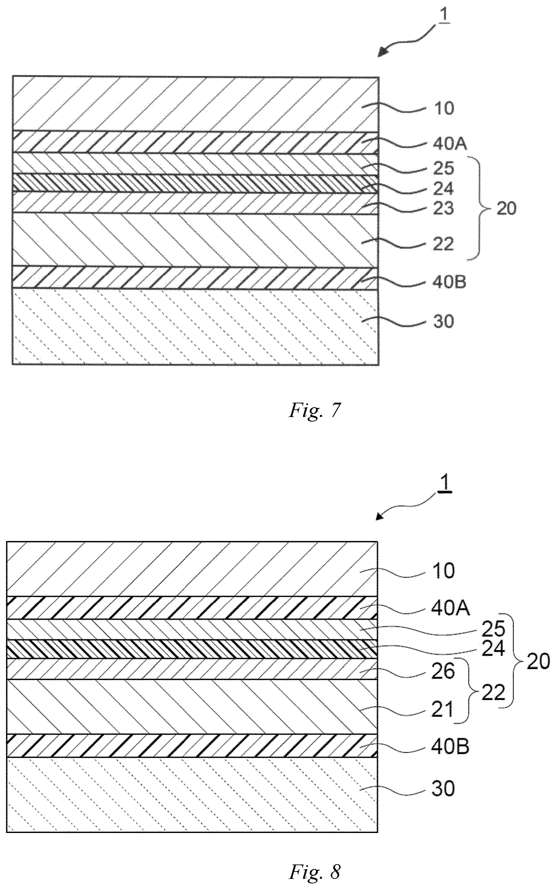

Fig. 7 is the same as Fig. 2 except that the barrier substrate 20 includes the polypropylene stretched substrate 22, the surface coating layer 23, the inorganic oxide layer 24, and the covering layer 25 in this order.

Fig. 8 is the same as Fig. 6 except that the polypropylene stretched substrate 22 includes the polypropylene layer 21 and the surface resin layer 26.

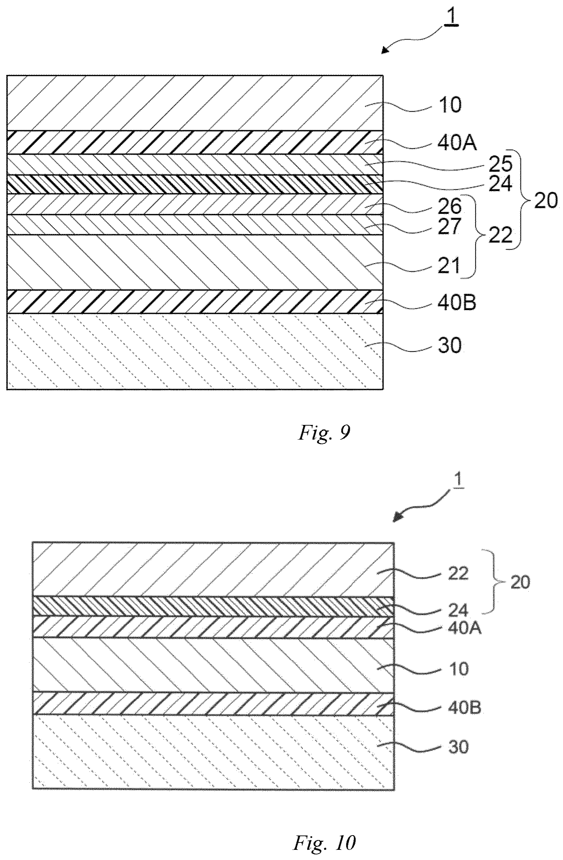

Fig. 9 is the same as Fig. 8 except that the polypropylene stretched substrate 22 includes the adhesive resin layer 27 between the polypropylene layer 21 and the surface resin layer 26.

A laminate 1 illustrated in Fig. 10 includes the barrier substrate 20 as a first substrate, the first adhesive layer 40A, the polypropylene stretched substrate 10 as a second substrate, the second adhesive layer 40B, and the sealant layer 30 in this order. The barrier substrate 20 includes the polypropylene stretched substrate 22 and the inorganic oxide layer 24. In this example, the barrier substrate 20 is disposed such that the polypropylene stretched substrate 22 constitutes the outermost layer of the laminate 1 and the inorganic oxide layer 24 faces the first adhesive layer 40A.

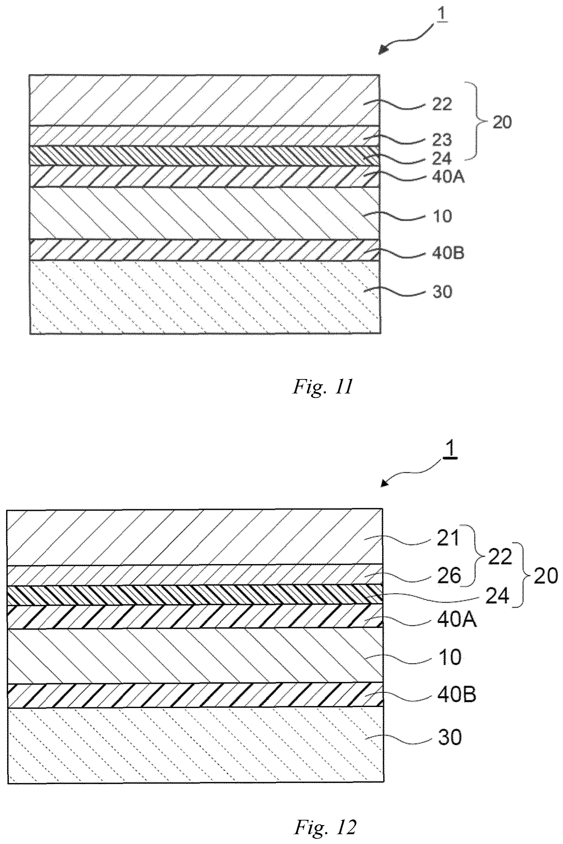

Fig. 11 is the same as Fig. 10 except that the barrier substrate 20 includes the surface coating layer 23 between the polypropylene stretched substrate 22 and the inorganic oxide layer 24.

Fig. 12 is the same as Fig. 10 except that the polypropylene stretched substrate 22 includes the polypropylene layer 21 and the surface resin layer 26.

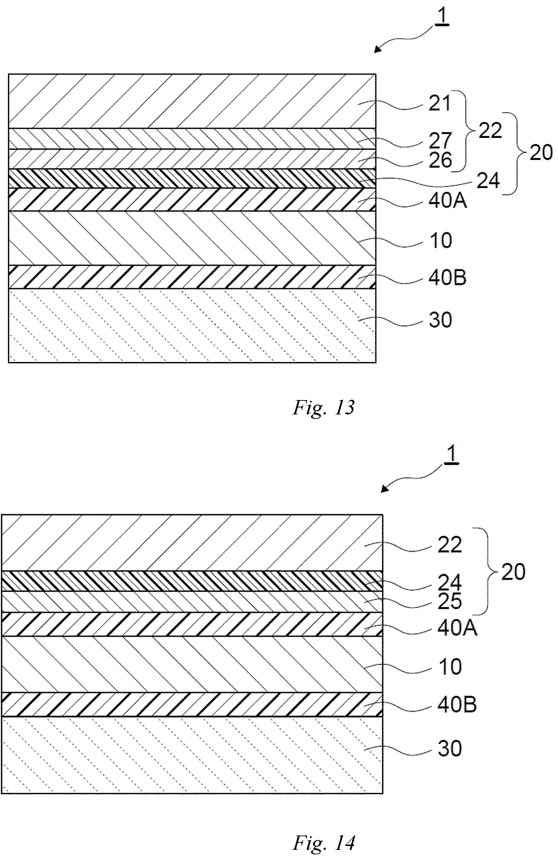

Fig. 13 is the same as Fig. 12 except that the polypropylene stretched substrate 22 includes the adhesive resin layer 27 between the polypropylene layer 21 and the surface resin layer 26.

Fig. 14 is the same as Fig. 10 except that the barrier substrate 20 includes the polypropylene stretched substrate 22, the inorganic oxide layer 24, and the covering layer 25 in this order.

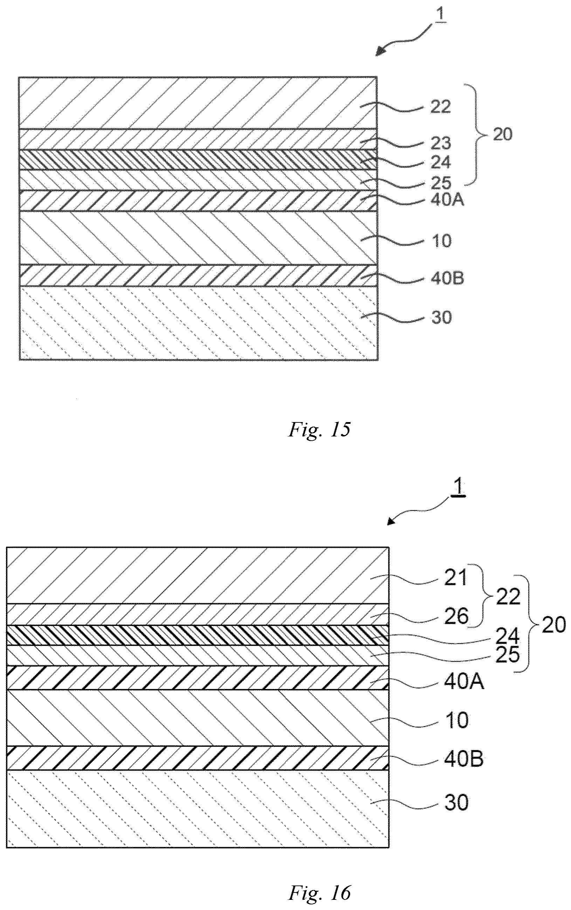

Fig. 15 is the same as Fig. 10 except that the barrier substrate 20 includes the polypropylene stretched substrate 22, the surface coating layer 23, the inorganic oxide layer 24, and the covering layer 25 in this order.

Fig. 16 is the same as Fig. 14 except that the polypropylene stretched substrate 22 includes the polypropylene layer 21 and the surface resin layer 26.

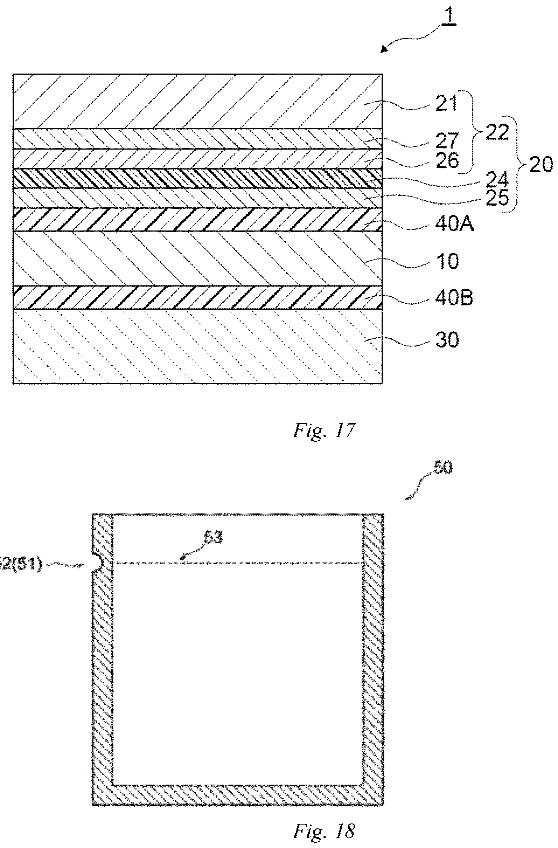

Fig. 17 is the same as Fig. 16 except that the polypropylene stretched substrate 22 includes the adhesive resin layer 27 between the polypropylene layer 21 and the surface resin layer 26.

The polypropylene content relative to the total amount of resin material in a laminate according to the present disclosure is preferably 80% by mass or more, more preferably 85% by mass or more, still more preferably 88% by mass or more, particularly preferably 90% by mass or more. A packaging bag produced using such a laminate has, for example, high recyclability. The upper limit of the polypropylene content relative to the total amount of resin material in a laminate according to the present disclosure may be, for example, but is not limited to, 99% by mass, 98% by mass, 97% by mass, 96% by mass, 95% by mass, or 94% by mass.

\<Polypropylene Stretched Substrate\>

The polypropylene stretched substrate contains polypropylene as a main component.

The polypropylene may be any of a homopolymer, a random copolymer, and a block copolymer, or may be a mixture of two or more selected from these. The polypropylene may be biomass-derived polypropylene and/or recycled polypropylene. The propylene homopolymer is a polymer composed only of propylene. The propylene random copolymer is a random copolymer of propylene and an $\alpha$-olefin or the like other than propylene. The propylene block copolymer is a copolymer having a polymer block composed of propylene and a polymer block composed of at least an $\alpha$-olefin or the like other than propylene. The polymer block composed of at least an $\alpha$-olefin or the like other than propylene may be a polymer block composed of propylene and an $\alpha$-olefin other than propylene.

The $\alpha$-olefin is, for example, an $\alpha$-olefin with 2 or more and 20 or less carbon atoms other than propylene, more specifically, ethylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, or 6-methyl-1-heptene.

Among polypropylenes, a random copolymer is preferred from the perspective of transparency, a homopolymer is preferred when the rigidity and heat resistance of a packaging bag are regarded as important, and a block copolymer is preferred when the impact resistance of a packaging bag is regarded as important.

From the perspective of film formability and processability, the melt flow rate (MFR) of the polypropylene is preferably 0.1 g/10 minutes or more, more preferably 0.3 g/10 minutes or more, and is preferably 50 g/10 minutes or less, more preferably 30 g/10 minutes or less; for example, 0.1 g/10 minutes or more and 50 g/10 minutes or less. The MFR of the polypropylene is measured under conditions of a temperature of 230°C and a load of 2.16 kg in accordance with JIS K 7210-1: 2014, Method A.

The mesopentad fraction of polypropylene as measured by $^{13}$C-NMR, which is a measure of the stereoregularity, is preferably 90% by mole or more, more preferably 95% by mole or more. Polypropylene with a mesopentad fraction equal to or higher than the lower limit has high crystallinity and a high melting point and therefore improves the heat resistance of a polypropylene stretched substrate composed thereof. The upper limit of the mesopentad fraction is 100% by mole but is practically 99.9% by mole or less, more practically 99.5% by mole or less.

Details of the conditions for measuring the mesopentad fraction by $^{13}$C-NMR are described in the section of Examples.

Among polypropylenes, propylene random copolymers and propylene block copolymers contain an $\alpha$-olefin or the like as a copolymerization component other than propylene. Thus, it is thought that propylene random copolymers and propylene block copolymers have lower stereoregularity than polypropylene homopolymers, which are polymers of only propylene. However, the mesopentad fraction is a measure of stereoregularity in which the amount of copolymerization component other than propylene is not considered. Thus, polypropylenes, even with the same mesopentad fraction, are considered to have different stereoregularities when they contain different amounts of copolymerization components other than propylene. For example, a polypropylene with a high $\alpha$-olefin content is considered to have low stereoregularity and therefore has low crystallinity and a low melting point. On the other hand, a polypropylene with a low $\alpha$-olefin content is considered to have high stereoregularity and therefore has high crystallinity and a high melting point, and a polypropylene stretched substrate containing the polypropylene has improved heat resistance.

The $\alpha$-olefin content of the polypropylene is preferably 3% by mole or less, more preferably 2% by mole or less, still more preferably 1% by mole or less. A polypropylene with an $\alpha$-olefin content equal to or lower than the upper limit has high stereoregularity, and a polypropylene stretched substrate containing the polypropylene has improved heat resistance. The lower limit of the $\alpha$-olefin content of polypropylene is 0% by mole. For example, a propylene homopolymer has an $\alpha$-olefin content of 0% by mole.

Details of a method for measuring the ethylene content of polypropylene are described in the section of Examples.

The polypropylene content of the polypropylene stretched substrate is preferably more than 50% by mass, more preferably 60% by mass or more, still more preferably 70% by mass or more, still more preferably 80% by mass or more, particularly preferably 85% by mass or more, 90% by mass or more, or 95% by mass or more.

The polypropylene stretched substrate may contain a resin material other than polypropylene. The resin material is, for example, a polyolefin other than polypropylene, such as polyethylene, an acrylic resin, a vinyl resin, a cellulose resin, a polyamide, a polyester, or an ionomer resin.

The polypropylene stretched substrate may contain an additive agent. The additive agent is, for example, a cross-linker, an antioxidant, an anti-blocking agent, a lubricant, an ultraviolet absorber, a light stabilizer, a filler, a reinforcing agent, an antistatic agent, a pigment, or a modifying resin.

The polypropylene stretched substrate is a polypropylene substrate subjected to a stretching treatment. A laminate including the polypropylene stretched substrate has, for example, high heat resistance, impact resistance, water resistance, and dimensional stability, and is suitable as, for example, a packaging material constituting a packaging bag to be subjected to a retort treatment or a boiling treatment.

The stretching treatment may be uniaxial stretching or biaxial stretching.

The stretch ratio in the case of stretching in the machine direction (the flow direction of the substrate, the MD direction) is preferably 2 times or more, more preferably 3 times or more, still more preferably 3.5 times or more, and is preferably 15 times or less, more preferably 8 times or less, still more preferably 7 times or less. The stretch ratio in the case of stretching in the width direction (the direction perpendicular to the MD direction, the TD direction) is preferably 4 times or more, more preferably 5 times or more, still more preferably 6 times or more, and is preferably 20 times or less, more preferably 17 times or less, still more preferably 15 times or less. The stretch ratio can be equal to or higher than a certain value to improve the strength and heat resistance of the substrate and improve the printability to the substrate. From the perspective of the fracture limit of the substrate, the stretch ratio is preferably equal to or lower than a certain value. The stretch ratio in the MD direction is preferably lower than the stretch ratio in the TD direction.

The polypropylene stretched substrate is, for example, a biaxially stretched substrate.

The polypropylene stretched substrate may be subjected to a surface treatment. This can improve, for example, the adhesion between the polypropylene stretched substrate and another layer. The surface treatment method is, for example, a physical treatment, such as a corona discharge treatment, an ozone treatment, a low-temperature plasma treatment using oxygen gas and/or nitrogen gas, or a glow discharge treatment, or a chemical treatment, such as an oxidation treatment using a chemical.

A layer with good adhesion may be provided on the surface of the polypropylene stretched substrate.

The polypropylene stretched substrate may have a monolayer structure or a multilayer structure.

The polypropylene stretched substrate has a thickness of preferably 10 $\mu$m or more, more preferably 15 $\mu$m or more, and preferably 100 $\mu$m or less, more preferably 50 $\mu$m or less; for example, 10 $\mu$m or more and 100 $\mu$m or less. A laminate including the stretched substrate with a thickness equal to or higher than the lower limit has, for example, high strength and heat resistance. A laminate including the stretched substrate with a thickness equal to or lower than the upper limit has, for example, high processability.

In the present description, the thickness of the substrate and each layer is measured as described below. A block in which a laminate is embedded in an embedding resin is prepared and is cut with a commercially available rotary microtome in a room temperature (25°C) environment to prepare a cross section of the laminate. The cross section is prepared by cutting in the thickness direction perpendicular to the main surface of the laminate. Finishing is performed with a diamond knife. The thickness of the substrate and each layer is calculated as an arithmetic mean of measurements taken at five points on the cross section observed with a scanning electron microscope (SEM, manufactured by Hitachi, Ltd., SU8000).

<Barrier Substrate>

The barrier substrate includes the polypropylene stretched substrate and the inorganic oxide layer. The barrier substrate includes, for example, the polypropylene stretched substrate and the inorganic oxide layer provided on one surface of the stretched substrate. The barrier substrate may include a surface coating layer between the polypropylene stretched substrate and the inorganic oxide layer. The barrier substrate may include a covering layer on the inorganic oxide layer. The barrier substrate may be transparent.

(Polypropylene Stretched Substrate)

The polypropylene stretched substrate in the barrier substrate may be the polypropylene stretched substrate described in the section <Polypropylene Stretched Substrate>. The polypropylene stretched substrate of the first substrate and the polypropylene stretched substrate of the second substrate may be the same or different.

The polypropylene stretched substrate in the barrier substrate may be, for example, a stretched substrate of another embodiment including a polypropylene layer, an optional adhesive resin layer, and a surface resin layer described later in this order. In this embodiment, the barrier substrate includes the stretched substrate of the other embodiment and an inorganic oxide layer provided on a surface resin layer of the stretched substrate. In this embodiment, the barrier substrate includes a polypropylene layer, an optional adhesive resin layer, a surface resin layer, and an inorganic oxide layer in this order. In one embodiment, the stretched substrate of the other embodiment is a coextruded stretched resin film.

The coextruded stretched resin film can be produced, for example, by forming a laminated film using a T-die method, an inflation method, or the like, and then stretching the laminated film.

The stretching treatment of the stretched substrate of the other embodiment may be uniaxial stretching or biaxial stretching.

The stretch ratio in the case of stretching in the MD direction is preferably 2 times or more, more preferably 3 times or more, still more preferably 3.5 times or more, and is preferably 15 times or less, more preferably 8 times or less, still more preferably 7 times or less. The stretch ratio in the case of stretching in the TD direction is preferably 4 times or more, more preferably 5 times or more, still more preferably 6 times or more, and is preferably 20 times or less, more preferably 17 times or less, still more preferably 15 times or less. The stretch ratio in the MD direction is preferably lower than the stretch ratio in the TD direction.

(Surface Coating Layer)

The barrier substrate may include a surface coating layer containing a resin material with a polar group between the polypropylene stretched substrate and the inorganic oxide layer. Such a barrier substrate includes the inorganic oxide layer with high adhesiveness and also has good gas barrier properties. Such a barrier substrate includes the polypropylene stretched substrate, the surface coating layer, and the inorganic oxide layer in this order.

The polar group refers to a group with at least one heteroatom, for example, an ester group, an epoxy group, a hydroxy group, an amino group, an amide group, a urethane group, a carboxy group, a carbonyl group, a carboxylic anhydride group, a sulfo group, a thiol group, or a halogen group. Among these, a carboxy group, a carbonyl group, an ester group, a hydroxy group, an amino group, an amide group, and a urethane group are preferred, and a carboxy group, a hydroxy group, an amide group, and a urethane group are more preferred.

The resin material with a polar group is, for example, an ethylene-vinyl alcohol copolymer (EVOH), poly(vinyl alcohol) (PVA), a polyester, a polyethyleneimine, an acrylic resin with a hydroxy group, a polyamide, such as nylon 6, nylon 6,6, MXD nylon, or amorphous nylon, or a polyurethane. Among these, an ethylene-vinyl alcohol copolymer, poly(vinyl alcohol), an acrylic resin with a hydroxy group, a polyamide, and a polyurethane are more preferred.

The surface coating layer can be formed, for example, using an aqueous emulsion or a solvent emulsion. The aqueous emulsion is, for example, a polyamide emulsion, a polyethylene emulsion, or a polyurethane emulsion. The solvent emulsion is, for example, an acrylic resin emulsion or a polyester emulsion.

The amount of the resin material with a polar group in the surface coating layer is preferably 70% by mass or more, more preferably 80% by mass or more, still more preferably 90% by mass or more.

The surface coating layer may contain a resin material other than the resin material with a polar group.

The surface coating layer may contain the additive agent described above.

The ratio of the thickness of the surface coating layer to the total thickness of the polypropylene stretched substrate and the surface coating layer is preferably 0.08% or more, more preferably 0.2% or more, still more preferably 1% or more, and is preferably 20% or less, more preferably 15% or less, still more preferably 10% or less, still more preferably 5% or less; for example, 0.08% or more and 20% or less. The surface coating layer has a thickness of preferably 0.02 $\mu$m or more, more preferably 0.05 $\mu$m or more, still more preferably 0.1 $\mu$m or more, still more preferably 0.2 $\mu$m or more, and preferably 10 $\mu$m or less, more preferably 5 $\mu$m or less; for example, 0.02 $\mu$m or more and 10 $\mu$m or less. The ratio or the thickness equal to or higher than the lower limit can result in, for example, an inorganic oxide layer with improved adhesiveness, suppression of the deterioration of the gas barrier properties, and a laminate with improved laminate strength. The ratio or the thickness equal to or lower than the upper limit can result in, for example, a barrier substrate with improved processability and a laminate with improved recyclability.

For example, a polypropylene stretched substrate and a resin substrate having a surface coating layer can be produced by forming a film of polypropylene or a resin composition containing polypropylene by a T-die method, an inflation method, or the like to produce a polypropylene substrate, stretching the substrate, applying a coating liquid for forming a surface coating layer to the stretched substrate, and drying the coating liquid.

(Polypropylene Layer, Surface Resin Layer, and Adhesive Resin Layer)

In a stretched substrate of another embodiment, the polypropylene layer contains polypropylene as a main component. The details of polypropylene are as described above, and the description thereof is omitted in this section. The polypropylene content of the polypropylene layer is preferably more than 50% by mass, more preferably 60% by mass or more, still more preferably 70% by mass or more, still more preferably 80% by mass or more, particularly preferably 85% by mass or more, 90% by mass or more, or 95% by mass or more.

The polypropylene layer may contain the above resin material other than polypropylene.

The polypropylene layer may contain the additive agent described above.

The polypropylene layer may have a monolayer structure or a multilayer structure. The polypropylene layer has a thickness of preferably 10 μm or more, more preferably 15 μm or more, and preferably 100 μm or less, more preferably 50 μm or less; for example, 10 μm or more and 100 μm or less.

The surface resin layer contains a resin material with a melting point of 180°C or more (hereinafter also referred to as a "high-melting-point resin material"). A surface resin layer containing a high-melting-point resin material can be provided between the polypropylene layer and the inorganic oxide layer, for example, to improve the adhesiveness of the inorganic oxide layer formed on the surface resin layer and suppress the deterioration of the gas barrier properties.

Furthermore, a packaging bag produced using a laminate including the surface resin layer has high laminate strength.

In one embodiment, the surface resin layer may be provided on the polypropylene layer. That is, the surface resin layer may be adjacent to the polypropylene layer.

In one embodiment, when a stretched substrate of another embodiment includes an adhesive resin layer between the polypropylene layer and the surface resin layer, the adhesive resin layer may be provided on the polypropylene layer, and the surface resin layer may be provided on the adhesive resin layer. That is, the adhesive resin layer may be adjacent to the polypropylene layer, and the surface resin layer may be adjacent to the adhesive resin layer.

The high-melting-point resin material preferably has a melting point of 185°C or more, more preferably 190°C or more, still more preferably 205°C or more. A melting point equal to or higher than the lower limit can result in, for example, an inorganic oxide layer with improved adhesiveness, suppression of the deterioration of the gas barrier properties, and a laminate with improved laminate strength. The high-melting-point resin material preferably has a melting point of 265°C or less, more preferably 260°C or less, still more preferably 250°C or less. This can improve, for example, the film formability of the stretched substrate.

In the present description, the melting point of a high-melting-point resin material or the like is measured in accordance with JIS K 7121: 2012 (Testing methods for transition temperatures of plastics). More specifically, a melting peak temperature as a melting point is determined by measuring a DSC curve at a heating rate of 10°C/min using a differential scanning calorimetry (DSC) apparatus.

It is preferable that the high-melting-point resin material in the surface resin layer have a melting point TA, the polypropylene in the polypropylene layer have a melting point TB, and the difference between the melting point TA and the melting point TB be 20°C or more. The difference between the melting point TA and the melting point TB is preferably 80°C or less, more preferably 60°C or less.

A difference between the melting point TA and the melting point TB equal to or higher than the lower limit can result in further improved adhesion between the surface resin layer and the inorganic oxide layer and further improved gas barrier properties. This can also result in a packaging bag with further improved laminate strength.

A difference between the melting point TA and the melting point TB equal to or lower than the upper limit can result in a polypropylene stretched substrate with further improved film formability.

The high-melting-point resin material preferably has a polar group. The polar group refers to a group with at least one heteroatom, for example, an ester group, an epoxy group, a hydroxy group, an amino group, an amide group, a urethane group, a carboxy group, a carbonyl group, a carboxylic anhydride group, a sulfo group, a thiol group, or a halogen group. Among these, a hydroxy group, an ester group, an amino group, an amide group, a carboxy group, and a carbonyl group are preferred, and an amide group is more preferred.

The high-melting-point resin material only needs to have a melting point of 180°C or more and is, for example, a polyolefin, a vinyl resin, an acrylic resin, a polyamide, a polyimide, a polyester, a cellulose resin, or an ionomer resin. For example, a resin material with a melting point of 180°C or more and with a polar group is preferred, and an ethylene-vinyl alcohol copolymer, poly(vinyl alcohol), a polyester, or a polyamide, such as nylon 6, nylon 6,6, MXD nylon, or amorphous nylon, is more preferred.

Such a resin material can be used to significantly improve the adhesiveness of the inorganic oxide layer formed on the surface resin layer and effectively suppress the deterioration of the gas barrier properties.

In one embodiment, the high-melting-point resin material is preferably a polyamide. A polyamide can be used as the high-melting-point resin material to suppress the deterioration of the gas barrier properties even after the laminate is bent and to improve the heat resistance of the laminate. Furthermore, even after the laminate is subjected to retort treatment and boiling treatment described later, the deterioration of the gas barrier properties can be suppressed. The high-melting-point resin material is more preferably nylon 6.

The surface resin layer preferably has a high-melting-point resin material content of 70% by mass or more, more preferably 80% by mass or more, still more preferably 90% by mass or more.

The surface resin layer may contain the resin material other than the high-melting-point resin material.

The surface resin layer may contain the additive agent.

The surface resin layer may be subjected to the surface treatment described above.

The ratio of the thickness of the surface resin layer to the total thickness of a stretched substrate of another embodiment including the polypropylene layer and the surface resin layer is preferably 1% or more, more preferably 1.5%

or more, and is preferably 10% or less, more preferably 5% or less; for example, 1% or more and 10% or less. The surface resin layer has a thickness of preferably 0.1 μm or more, more preferably 0.2 μm or more, and preferably 5 μm or less, more preferably 4 μm or less; for example, 0.1 μm or more and 5 μm or less. The ratio or the thickness equal to or higher than the lower limit can result in, for example, an inorganic oxide layer with improved adhesiveness, suppression of the deterioration of the gas barrier properties, and a laminate with improved laminate strength. The ratio or the thickness equal to or lower than the upper limit can result in, for example, a stretched substrate of another embodiment with improved film formability and processability and a laminate with improved recyclability.

A stretched substrate of another embodiment may include an adhesive resin layer between the polypropylene layer and the surface resin layer. This can improve the adhesion between the layers. The adhesive resin layer has a thickness of, for example, 1 μm or more and 15 μm or less. The adhesive resin layer with a thickness equal to or higher than the lower limit can further improve the adhesion between the polypropylene layer and the surface resin layer. The adhesive resin layer with a thickness equal to or lower than the upper limit can improve the processability of the barrier substrate.

The adhesive resin layer can be formed of, for example, an adhesive resin. The adhesive resin is, for example, a polyether, a polyester, a polyurethane, a silicone resin, an epoxy resin, a vinyl resin, a phenolic resin, a polyolefin, or an acid-modified product of a polyolefin. Among these, from the perspective of the recyclability of the laminate, a polyolefin and an acid-modified product thereof are preferred, and polypropylene and an acid-modified product thereof are more preferred. Polypropylene used for the adhesive resin layer may be a commercial product, for example, Admer series manufactured by Mitsui Chemicals, Inc.

(Inorganic Oxide Layer)

The barrier substrate includes an inorganic oxide layer. The inorganic oxide layer contains one or two or more inorganic oxides and is, for example, a vapor-deposited film of an inorganic oxide. A laminate including the barrier substrate has good gas barrier properties, more specifically, good oxygen barrier properties and water vapor barrier properties. A packaging bag produced using such a laminate can suppress the oxidative degradation of the contents filled in the packaging bag and can reduce the mass loss of the contents. The barrier substrate may include, for example, an inorganic oxide layer on a surface coating layer or may include an inorganic oxide layer on a surface resin layer.

The inorganic oxide is, for example, aluminum oxide (alumina), silicon oxide (silica), magnesium oxide, calcium oxide, zirconium oxide, titanium oxide, boron oxide, hafnium oxide, barium oxide, or silicon oxycarbide (carbon-containing silicon oxide). Among these, silica, silicon oxycarbide, and alumina are preferred.

In one embodiment, the inorganic oxide is more preferably silica because an aging treatment after the formation of the inorganic oxide layer is not required. In one embodiment, the inorganic oxide is more preferably carbon-containing silicon oxide because the deterioration of the gas barrier properties can be suppressed even when the laminate is bent.

The inorganic oxide layer has a thickness of preferably 1 nm or more, more preferably 5 nm or more, still more preferably 10 nm or more, and preferably 150 nm or less, more preferably 60 nm or less, still more preferably 40 nm or less; for example, 1 nm or more and 150 nm or less. A laminate including an inorganic oxide layer with a thickness equal to or higher than the lower limit has, for example, good oxygen barrier properties and water vapor barrier properties. For example, a laminate including an inorganic oxide layer with a thickness equal to or lower than the upper limit can suppress the occurrence of a crack in the inorganic oxide layer and has high recyclability.

The surface of the inorganic oxide layer may be subjected to the surface treatment described above.

A method for forming an inorganic oxide layer, particularly an inorganic oxide deposited film, is, for example, a physical vapor deposition method (PVD method), such as a vacuum deposition method, a sputtering method, or an ion plating method, and a chemical vapor deposition method (CVD method), such as a plasma chemical vapor deposition method, a thermal chemical vapor deposition method, or a photochemical vapor deposition method.

The inorganic oxide layer may be a single layer formed by a single vapor deposition step or multiple layers formed by a plurality of vapor deposition steps. When the inorganic oxide layer has multiple layers, each layer may be composed of the same inorganic oxide or different inorganic oxides. Each layer may be formed by the same method or different methods.

The inorganic oxide layer is preferably a vapor-deposited film formed by a CVD method, more preferably a carbon-containing silicon oxide deposited film formed by a CVD method. A laminate including such an inorganic oxide layer has, for example, high bending resistance.

The carbon-containing silicon oxide deposited film contains silicon, oxygen, and carbon.

In one embodiment of the carbon-containing silicon oxide deposited film, the carbon content C is preferably 3% or more, more preferably 5% or more, still more preferably 10% or more, and is preferably 50% or less, more preferably 40% or less, still more preferably 35% or less, for example, 3% or more and 50% or less, relative to the total (100%) of the three elements of silicon, oxygen, and carbon. A carbon content C in such a range can result in, for example, a laminate with less deterioration of the gas barrier properties even when bent.

In the present description, the ratio of each element is on a molar basis.

In one embodiment of the carbon-containing silicon oxide deposited film, the silicon content Si is preferably 1% or more, more preferably 3% or more, still more preferably 8% or more, and is preferably 45% or less, more preferably 38% or less, still more preferably 33% or less, for example, 1% or more and 45% or less, relative to the total (100%) of the three elements of silicon, oxygen, and carbon. The oxygen content O is preferably 10% or more, more preferably 20% or more, still more preferably 25% or more, and is preferably 70% or less, more preferably 65% or less, still more preferably 60% or less, for example, 10% or more and 70% or less, relative to the total (100%) of the three elements of silicon, oxygen, and carbon. A silicon content Si and an oxygen content O in such a range can result in, for example, a laminate with much less deterioration of the gas barrier properties even when bent.

In one embodiment of the carbon-containing silicon oxide deposited film, the oxygen content O is preferably higher than the carbon content C, and the silicon content Si is preferably lower than the carbon content C. The oxygen content O is preferably higher than the silicon content Si; that is, the oxygen content O, the carbon content C, and the silicon content Si preferably decrease in this order. This can further suppress, for example, the deterioration of the gas barrier properties even when the laminate is bent.

The carbon content C, the silicon content Si, and the oxygen content O of the carbon-containing silicon oxide deposited film are measured by X-ray photoelectron spectroscopy (XPS) using narrow scan analysis under the following measurement conditions.

(Measurement Conditions)

Apparatus: "ESCA-3400" (manufactured by Kratos)

[1] Spectrum Measurement Conditions

Incident X-ray: MgK$\alpha$ (monochromated X-ray, hv = 1253.6 eV)

X-ray output: 150 W (10 kV x 15 mA)

X-ray scan area (measurement region): approximately 6 mm$\phi$

Photoelectron acceptance angle: 90 degrees

[2] Ion Sputtering Conditions

Ionic species: Ar$^+$

Accelerating voltage: 0.2 (kV)

Emission current: 20 (mA)

Etch range: 10 mm$\phi$

Ion sputtering time: 30 seconds to measure a spectrum

(Covering Layer)

The barrier substrate may further include a covering layer on the inorganic oxide layer. That is, the barrier substrate may further include a covering layer on the surface of the inorganic oxide layer opposite the surface facing the polypropylene stretched substrate. A laminate including such a barrier substrate has, for example, good oxygen barrier properties and water vapor barrier properties.

When the barrier substrate includes a covering layer, the covering layer may be adjacent to the first adhesive layer or the second adhesive layer.

In one embodiment, the covering layer contains a resin component. The resin component is, for example, a polyolefin, such as polyethylene, polypropylene, polybutene, or polymethylpentene, a vinyl resin, an acrylic resin, a polyester, a urethane resin, a melamine resin, or an epoxy resin. The resin component content of the covering layer is preferably more than 50% by mass, more preferably 75% by mass or more, and is preferably 95% by mass or less, more preferably 90% by mass or less; for example, more than 50% by mass and 95% by mass or less.

The covering layer may contain the additive agent described above.

The covering layer has a thickness of preferably 0.01 $\mu$m or more, more preferably 0.05 $\mu$m or more, still more

preferably 0.1 μm or more, and preferably 5 μm or less, more preferably 3 μm or less, still more preferably 1 μm or less; for example, 0.01 μm or more and 5 μm or less. Such a covering layer has, for example, high scratch resistance.

The covering layer can be formed, for example, by applying a coating liquid for a covering layer to the surface of the inorganic oxide layer and drying the coating liquid. The coating liquid for a covering layer can be prepared, for example, by mixing the above-described resin component, an additive agent as required, and a solvent. Details of these components are as described above. A method for applying the coating liquid for a covering layer may be a known coating method. A method for drying the applied coating liquid for a covering layer is, for example, a method of applying heat, such as hot-air drying, hot-roll drying, or infrared irradiation. The drying temperature may be 50°C or more and may be 150°C or less.

In one embodiment, the covering layer may be a barrier coating layer containing a gas barrier resin. The gas barrier resin is, for example, an ethylene-vinyl alcohol copolymer, poly(vinyl alcohol), a polyacrylonitrile, a polyester, a polyamide, such as nylon 6, nylon 6,6, or poly(m-xylylene adipamide), a polyurethane, or an acrylic resin. Among these, poly(vinyl alcohol) is preferred from the perspective of oxygen barrier properties and water vapor barrier properties.

Furthermore, poly(vinyl alcohol) in the barrier coating layer can effectively prevent the occurrence of a crack in the inorganic oxide layer.

The gas barrier resin content of the barrier coating layer is preferably 50% by mass or more, more preferably 60% by mass or more, still more preferably 70% by mass or more, still more preferably 75% by mass or more, and is preferably 95% by mass or less, more preferably 90% by mass or less; for example, 50% by mass or more and 95% by mass or less. Such a barrier coating layer has, for example, good gas barrier properties.

The barrier coating layer may contain the additive agent described above.

The barrier coating layer containing the gas barrier resin has a thickness of preferably 0.01 μm or more, more preferably 0.1 μm or more, and preferably 10 μm or less, more preferably 5 μm or less; for example, 0.01 μm or more and 10 μm or less. A barrier substrate including the barrier coating layer with a thickness equal to or higher than the lower limit has, for example, good gas barrier properties. A barrier substrate including the barrier coating layer with a thickness equal to or lower than the upper limit can improve, for example, the processability and recyclability of the laminate.

Furthermore, the barrier coating layer with a thickness in the above range does not impair the recyclability even when the gas barrier resin is a resin material different from polypropylene.

The barrier coating layer can be formed, for example, by dissolving or dispersing a material, such as a gas barrier resin, in water or an appropriate organic solvent, applying the resulting coating liquid to the surface of the inorganic oxide layer, and drying the coating liquid. The barrier coating layer can also be formed, for example, by applying and drying a commercially available barrier coating agent.

In one embodiment, the covering layer may be a gas barrier coating film formed by subjecting a composition containing a metal alkoxide and a water-soluble polymer to a polycondensation treatment by a sol-gel method in the presence of a sol-gel method catalyst, water, an organic solvent, and the like. A barrier substrate including a gas barrier coating film on an inorganic oxide layer has, for example, good gas barrier properties. The gas barrier coating film contains a hydrolytic polycondensate produced by hydrolysis and polycondensation of the metal alkoxide or the like by a sol-gel method. Such a gas barrier coating film on the inorganic oxide layer can effectively suppress, for example, the occurrence of a crack in the inorganic oxide layer.

The metal alkoxide is represented, for example, by the formula (1):

$$R^1{}_n M(OR^2)_m \qquad (1)$$

In the formula (1), $R^1$ and $R^2$ each independently denote an organic group with 1 or more and 8 or less carbon atoms, M denotes a metal atom, n denotes an integer of 0 or more, m denotes an integer of 1 or more, and n + m denotes the valence of M. The organic group in $R^1$ and $R^2$ is, for example, an alkyl group with 1 or more and 8 or less carbon atoms, such as a methyl group, an ethyl group, a n-propyl group, an isopropyl group, a n-butyl group, an isobutyl group, a sec-butyl group, a t-butyl group, a n-hexyl group, or a n-octyl group. The metal atom M is, for example, silicon, zirconium, titanium, or aluminum. The metal alkoxide is, for example, an alkoxysilane, such as tetramethoxysilane, tetraethoxysilane, tetrapropoxysilane, or tetrabutoxysilane.

The water-soluble polymer is, for example, a polymer with a hydroxy group, such as poly(vinyl alcohol) or an ethylene-vinyl alcohol copolymer. Depending on desired physical properties, such as oxygen barrier properties, water vapor barrier properties, water resistance, or weather resistance, poly(vinyl alcohol) and an ethylene-vinyl alcohol copolymer may be used alone or in combination, or a gas barrier coating film formed using poly(vinyl alcohol) and a gas barrier coating film formed using an ethylene-vinyl alcohol copolymer may be laminated. The amount of the water-soluble polymer to be used is preferably 3 parts by mass or more, more preferably 5 parts by mass or more, and preferably 500 parts by mass or less, per 100 parts by mass of the metal alkoxide. The gas barrier coating film with a water-soluble polymer content equal to or higher than the lower limit can further improve the oxygen barrier properties and water vapor barrier properties of the laminate. The gas barrier coating film with a water-soluble polymer content equal to or lower than the upper limit can improve the film formability of the gas barrier coating film.

The metal alkoxide may be used together with a silane coupling agent. The silane coupling agent can be a known organoalkoxysilane with an organic reactive group, preferably an organoalkoxysilane with an epoxy group, for example, γ-glycidoxypropyltrimethoxysilane, γ-glycidoxypropylmethyldiethoxysilane, or β-(3,4-epoxycyclohexyl)ethyltrimethoxysilane. The amount of the silane coupling agent to be used is preferably 1 part by mass or more and 20 parts by mass or less per 100 parts by mass of the metal alkoxide.

In the gas barrier coating film, the ratio of the metal alkoxide to the water-soluble polymer (metal alkoxide/water-soluble polymer) is preferably 4.5 or less, more preferably 3.5 or less, and is preferably 1.0 or more, more preferably 1.7 or more, for example, 1.0 or more and 4.5 or less, on a mass basis.

When the ratio of the metal alkoxide to the water-soluble polymer is equal to or lower than the upper limit, it is possible to suppress the deterioration of the gas barrier properties even after the laminate is bent.

When the ratio of the metal alkoxide to the water-soluble polymer is equal to or higher than the lower limit, the heat resistance of the laminate can be improved. This can also suppress the deterioration of the gas barrier properties even after the laminate is subjected to retort treatment and boiling treatment.

The above ratio is a solid content ratio.

The ratio of silicon atoms to carbon atoms (Si/C) on the surface of the gas barrier coating film as measured by X-ray photoelectron spectroscopy (XPS) is preferably 1.60 or less, more preferably 1.35 or less, and is preferably 0.50 or more, more preferably 0.90 or more.

When the ratio of silicon atoms to carbon atoms is equal to or lower than the upper limit, it is possible to suppress the deterioration of the gas barrier properties even after the laminate is bent.

When the ratio of silicon atoms to carbon atoms is equal to or higher than the lower limit, the heat resistance of the laminate can be improved. This can also suppress the deterioration of the gas barrier properties even after the laminate is subjected to retort treatment and boiling treatment.

A ratio of silicon atoms to carbon atoms in such a range can be achieved by appropriately adjusting the ratio of the metal alkoxide to the water-soluble polymer.

In the present description, the ratio of silicon atoms to carbon atoms is on a molar basis.

The ratio of silicon atoms to carbon atoms in X-ray photoelectron spectroscopy (XPS) can be measured by narrow scan analysis under the following measurement conditions.

(Measurement Conditions)

Apparatus: "ESCA-3400" (manufactured by Kratos)

[1] Spectrum Measurement Conditions

Incident X-ray: MgKα (monochromated X-ray, hv = 1253.6 eV)

X-ray output: 150 W (10 kV x 15 mA)

X-ray scan area (measurement region): approximately 6 mmφ

Photoelectron acceptance angle: 90 degrees

[2] Ion Sputtering Conditions

Ionic species: Ar⁺

Accelerating voltage: 0.2 (kV)

Emission current: 20 (mA)

Etch range: 10 mmφ

Ion sputtering time: 30 seconds + 30 seconds + 60 seconds (120 seconds in total) to measure a spectrum

The gas barrier composition may preferably contain water in an amount of 0.1 mol or more, more preferably 0.5 mol or more, still more preferably 0.8 mol or more, and preferably 100 mol or less, more preferably 60 mol or less, still more preferably 2 mol or less, per mole of the metal alkoxide. A water content equal to or higher than the lower limit can result in, for example, a laminate with improved oxygen barrier properties and water vapor barrier properties. A water content equal to or lower than the upper limit can result in, for example, a rapid hydrolysis reaction.

The gas barrier composition may contain an organic solvent. The organic solvent is, for example, methyl alcohol, ethyl alcohol, n-propyl alcohol, isopropyl alcohol, or n-butyl alcohol.

The sol-gel method catalyst is preferably an acid or an amine compound.

The acid is, for example, a mineral acid, such as sulfuric acid, hydrochloric acid, or nitric acid, or an organic acid, such as acetic acid or tartaric acid. The amount of the acid to be used is preferably 0.001 mol or more and 0.05 mol or less per total mole of the metal alkoxide and the alkoxide moiety (for example, silicate moiety) of the silane coupling agent. When the amount of the acid to be used is equal to or higher than the lower limit, the catalytic effect can be improved. When the amount of the acid to be used is equal to or lower than the upper limit, a gas barrier coating film with a uniform thickness can be formed.

The amine compound is preferably a tertiary amine that is substantially insoluble in water and soluble in an organic solvent, for example, N,N-dimethylbenzylamine, tripropylamine, tributylamine, or tripentylamine. Among these, N,N-dimethylbenzylamine is preferred.

The amount of the amine compound to be used is preferably 0.01 parts by mass or more, more preferably 0.03 parts by mass or more, and is preferably 1.0 part by mass or less, more preferably 0.3 parts by mass or less, per 100 parts by mass of the metal alkoxide and the silane coupling agent in total. When the amount of the amine compound to be used is equal to or higher than the lower limit, the catalytic effect thereof can be improved. When the amount of the amine compound to be used is equal to or lower than the upper limit, a gas barrier coating film with a uniform thickness can be formed.

A method for applying the gas barrier composition is, for example, roll coating with a gravure roll coater or the like, spray coating, spin coating, dipping, brushing, bar coating, or application means, such as an applicator.

One embodiment of a method for forming a gas barrier coating film will be described below.

A gas barrier composition is prepared by mixing a metal alkoxide, a water-soluble polymer, a sol-gel method catalyst, water, an organic solvent, a silane coupling agent as required, and the like. A polycondensation reaction proceeds gradually in the composition. The composition is applied to the inorganic oxide layer and is dried in the usual manner. The drying further promotes the polycondensation of the metal alkoxide and the water-soluble polymer (and the silane coupling agent when the composition contains the silane coupling agent), thereby forming a layer of a composite polymer. This operation may be repeated to stack a plurality of composite polymer layers. For example, the applied composition is preferably heated at a temperature of 20°C or more, more preferably 50°C or more, still more preferably 70°C or more, and preferably 250°C or less, more preferably 220°C or less, still more preferably 150°C or less, still more preferably 120°C or less, particularly preferably 100°C or less, for 1 second or more and 10 minutes or less. Thus, a gas barrier coating film can be formed.

The gas barrier coating film has a thickness of preferably 0.01 $\mu$m or more, more preferably 0.1 $\mu$m or more, and preferably 100 $\mu$m or less, more preferably 10 $\mu$m or less, still more preferably 2 $\mu$m or less, still more preferably 1 $\mu$m or less, particularly preferably 0.5 $\mu$m or less; for example, 0.01 $\mu$m or more and 100 $\mu$m or less. For example, this can suppress the deterioration of the gas barrier properties, suppress the occurrence of a crack in the inorganic oxide layer, and improve the recyclability of a packaging bag.

<Print Layer>

A laminate according to the present disclosure may have a print layer on the surface of a substrate, such as a first substrate or a second substrate. An image formed on the print layer is, but not limited to, a character, a pattern, a symbol, a combination thereof, or the like. The print layer may be formed using a biomass-derived ink. This can further reduce the environmental load.

A method for forming a print layer is, for example, a known printing method, such as a gravure printing method, an offset printing method, or a flexographic printing method. Among these, the flexographic printing method is preferred from the perspective of environmental load reduction.

The print layer has a thickness of, for example, 0.5 $\mu$m or more and 3 $\mu$m or less.

<Sealant Layer>

A laminate according to the present disclosure includes a sealant layer.

The sealant layer contains polypropylene as a main component. The sealant layer contains a resin material of the same type as the polypropylene stretched substrate, that is, polypropylene as a main component. Thus, the laminate can be made of a single material. This eliminates the need to separate the substrate and the sealant layer of a used packaging bag collected and can improve the recyclability of the packaging bag.

The sealant layer preferably has a polypropylene content of more than 50% by mass, more preferably 60% by mass or more, still more preferably 70% by mass or more, still more preferably 80% by mass or more, particularly preferably 85% by mass or more, 90% by mass or more, or 95% by mass or more. A laminate including such a sealant layer has, for example, high recyclability.

The polypropylene is, for example, a propylene homopolymer, a propylene random copolymer, such as a propylene-α-olefin random copolymer, or a propylene block copolymer, such as a propylene-α-olefin block copolymer. The α-olefin is described in detail above. From the perspective of heat sealability, the polypropylene has a density of, for example, 0.88 g/cm³ or more and 0.92 g/cm³ or less. The density is measured in accordance with JIS K 7112: 1999, Method D (density-gradient tube method, 23°C). From the perspective of environmental load reduction, biomass-derived polypropylene and/or recycled polypropylene may be used.

The sealant layer may contain the additive agent described above.

The sealant layer may have a monolayer structure or a multilayer structure.

The sealant layer has a thickness of preferably 10 μm or more, more preferably 20 μm or more, and preferably 200 μm or less, more preferably 150 μm or less; for example, 10 μm or more and 200 μm or less. A laminate including a sealant layer with a thickness equal to or higher than the lower limit has, for example, high seal strength. A laminate including a sealant layer with a thickness equal to or lower than the upper limit has, for example, high processability. When a pouch (in particular, a retort pouch) is produced from a laminate, the sealant layer preferably has a thickness of 30 μm or more and 100 μm or less.

The sealant layer has a composite modulus of elasticity of preferably 900 MPa or less, more preferably 870 MPa or less, still more preferably 850 MPa or less, and preferably 300 MPa or more, more preferably 400 MPa or more, still more preferably 500 MPa or more; for example, 300 MPa or more and 900 MPa or less. A packaging bag produced using a laminate including a sealant layer with a composite modulus of elasticity in the above range tends to have high impact resistance and accordingly high resistance to drop-induced package rupture.

The composite modulus of elasticity of the sealant layer is measured by a nanoindentation method. More specifically, the composite modulus of elasticity is measured using a nanoindenter on a cross section of the sealant layer of the laminate as a measurement surface. The cross section is prepared by cutting the laminate in the thickness direction. The portion into which the indenter is pushed is near the central portion of the sealant layer in the thickness direction in the portion where the cross section of the sealant layer is exposed. The measurement conditions are described below. A Berkovich indenter (triangular pyramid indenter) is used as the indenter of the nanoindenter. The indenter is pushed into the sealant layer from the cross section of the sealant layer to an indentation depth of 100 nm over 3 seconds, this state is held for 5 seconds, and the load is then removed over 3 seconds to obtain the maximum load $P_{max}$, the projected contact area $A_p$ at the maximum depth, and a load-displacement curve. The composite modulus of elasticity is calculated from the load-displacement curve using the following formula (1).

[Math. 1]

$$E_r = \frac{S\sqrt{\pi}}{2\sqrt{A_p}} \quad \cdots \quad (1)$$

In the formula (1), $A_p$ denotes the projected contact area, $S$ denotes the contact stiffness, and $E_r$ denotes the composite modulus of elasticity of the sealant layer.

The measurement is performed in a room temperature (23°C) environment. The measurement is performed at five or more points on the same cross section, and the composite modulus of elasticity is defined as an arithmetic mean of the values of five points measured with good reproducibility. Details of the measurement conditions are described in the section of Examples.

When the sealant layer contains a propylene block copolymer, the composite modulus of elasticity of the sealant layer can be adjusted by the ethylene-propylene rubber (EPR) content. More specifically, as the ethylene-propylene rubber (EPR) content increases, the composite modulus of elasticity can be decreased, and as the ethylene-propylene rubber (EPR) content decreases, the composite modulus of elasticity can be increased.

When the sealant layer contains a propylene block copolymer, the composite modulus of elasticity of the sealant layer can be adjusted by the amount of additive agent, such as polyethylene or an elastomer. More specifically, as the additive agent content increases, the composite modulus of elasticity can be decreased, and as the additive agent content decreases, the composite modulus of elasticity can be increased.

The composite modulus of elasticity of the sealant layer divided by the thickness of the sealant layer is preferably

1.5 MPa/$\mu$m or more, more preferably 5 MPa/$\mu$m or more, still more preferably 10 MPa/$\mu$m or more. The composite modulus of elasticity of the sealant layer divided by the thickness of the sealant layer is preferably less than 90 MPa/$\mu$m and is preferably 60 MPa/$\mu$m or less, more preferably 30 MPa/$\mu$m or less. The composite modulus of elasticity of the sealant layer divided by the thickness of the sealant layer is, for example, 1.5 MPa/$\mu$m or more and less than 90 MPa/$\mu$m. A laminate including such a sealant layer tends to have higher tearability, and a packaging bag produced using the laminate tends to have higher openability.

The sealant layer is preferably an unstretched polypropylene film from the perspective of heat sealability, and the unstretched polypropylene film can be produced, for example, by a casting method, a T-die method, an inflation method, or the like.

The sealant layer may be subjected to the surface treatment described above.

<Adhesive Layer>

A laminate according to the present disclosure includes a first adhesive layer between a first substrate and a second substrate. A laminate according to the present disclosure includes a second adhesive layer between a second substrate and a sealant layer. Such a laminate has, for example, high laminate strength between the first substrate and the second substrate and between the second substrate and the sealant layer.

(First Adhesive Layer)

The modulus of elasticity measured with an atomic force microscope (AFM) on a cross section of the first adhesive layer is 30.0 MPa or more, preferably 33.0 MPa or more, more preferably 35.0 MPa or more. A laminate including a second adhesive layer with a modulus of elasticity equal to or higher than the lower limit and with a thickness of 0.5 $\mu$m or more and 3.0 $\mu$m or less tends to have high tearability, and a packaging bag produced using the laminate tends to have high openability.

The modulus of elasticity of a cross section of the first adhesive layer as measured with the AFM is preferably 120 MPa or less, more preferably 110 MPa or less, still more preferably 100 MPa or less, still more preferably 90.0 MPa or less, particularly preferably 80.0 MPa or less, 70.0 MPa or less, 60.0 MPa or less, or 50.0 MPa or less. A laminate including a first adhesive layer with a modulus of elasticity equal to or lower than the upper limit tends to have high laminate strength.

The first adhesive layer has a modulus of elasticity of, for example, 30.0 MPa or more and 120 MPa or less. The details of the measurement conditions of the modulus of elasticity using an AFM are described in the section of Examples.

The first adhesive layer with the above modulus of elasticity can be formed, for example, by using a solvent-free adhesive described later and appropriately changing the type and molecular weight of a polymer component contained in a main agent described later, the type of curing agent, the mole ratio (NCO/OH), and aging conditions.

The first adhesive layer has a thickness of 3.0 $\mu$m or less, preferably 2.5 $\mu$m or less, more preferably 2.0 $\mu$m or less, still more preferably 1.5 $\mu$m or less, and 0.5 $\mu$m or more, preferably 0.8 $\mu$m or more, more preferably 1.0 $\mu$m or more, for example, 0.5 $\mu$m or more and 3.0 $\mu$m or less. A laminate including a first adhesive layer with a modulus of elasticity of 30.0 MPa or more and with a thickness equal to or lower than the upper limit tends to have high tearability, and a packaging bag produced using the laminate tends to have high openability. A laminate including a first adhesive layer with a modulus of elasticity of 30.0 MPa or more and with a thickness equal to or higher than the lower limit tends to have high tearability, and a packaging bag produced using the laminate tends to have high openability.

Furthermore, when the first adhesive layer has a thickness equal to or lower than the upper limit, a laminate including the first adhesive layer can have improved productivity. The reason is as described below.

A typical method for producing a laminate according to the present disclosure may be a method of bonding a first substrate and a second substrate via a first adhesive layer to form an intermediate laminate, and then bonding the intermediate laminate to a sealant layer via a second adhesive layer. Since the intermediate laminate formed by bonding the first substrate and the second substrate via the first adhesive layer with a thickness equal to or lower than the upper limit has a small thickness, the roll diameter is unlikely to increase when the intermediate laminate is wound into a roll, and it is easy to increase the length of the intermediate laminate. As the length of the intermediate laminate increases, the time loss of switching from the step of bonding the first substrate and the second substrate to the step of bonding the intermediate laminate and the sealant layer decreases, resulting in the laminate with improved productivity.

The thickness of the first adhesive layer relative to the thickness of the entire laminate is preferably 0.5% or more, more preferably 0.8% or more, still more preferably 1.0% or more, and preferably 3.0% or less, more preferably 2.5% or less, still more preferably 2.0% or less, still more preferably 1.5% or less; for example, 0.5% or more and 3.0% or less.

When the modulus of elasticity of the first adhesive layer is equal to or higher than a certain value, the reason why the laminate including the first adhesive layer has high tearability is considered as described below.

The modulus of elasticity is generally a measure of difficulty in deformation of an object, and a higher modulus of elasticity means that the object is more difficult to deform. Furthermore, when the laminate is torn, it is common that the laminate is sequentially torn from the first substrate constituting the outside of the laminate toward the sealant layer. When the modulus of elasticity of the first adhesive layer between the first substrate and the second substrate is equal to or higher than a certain value (for example, 30 MPa or more), the first adhesive layer is difficult to deform, and when a force is applied to the first substrate, the force is easily propagated to the second substrate, the second adhesive layer, and the sealant layer via the first adhesive layer. That is, the force of tearing the first substrate is easily transmitted to the second substrate and other layers and easily acts as a force of tearing other layers. Consequently, it is thought that the entire laminate is easily torn, and the laminate has high tearability.

In one embodiment, the modulus of elasticity of the first adhesive layer divided by the thickness of the first adhesive layer is preferably 10 MPa/$\mu$m or more, more preferably 15 MPa/$\mu$m or more, still more preferably 25 MPa/$\mu$m or more. The modulus of elasticity of the first adhesive layer divided by the thickness of the first adhesive layer is preferably 240 MPa/$\mu$m or less, preferably 100 MPa/$\mu$m or less, more preferably 50 MPa/$\mu$m or less. The modulus of elasticity of the second adhesive layer divided by the thickness of the second adhesive layer is, for example, 10 MPa/$\mu$m or more and 240 MPa/$\mu$m or less. A laminate including such a first adhesive layer tends to have high tearability, and a packaging bag produced using the laminate tends to have high openability.

(Second Adhesive Layer)

The second adhesive layer has a thickness of preferably 0.5 $\mu$m or more, more preferably 0.8 $\mu$m or more, still more preferably 1.0 $\mu$m or more, particularly preferably 3.0 $\mu$m or more, and preferably 10.0 $\mu$m or less, more preferably 8.0 $\mu$m or less, still more preferably 6.0 $\mu$m or less, particularly preferably 5.0 $\mu$m or less; for example, 0.5 $\mu$m or more and 10.0 $\mu$m or less. In a laminate including a second adhesive layer with a thickness equal to or higher than the lower limit, the elongation of the sealant layer can be suppressed at the time of tearing.

In an embodiment (A), the modulus of elasticity of a cross section of the second adhesive layer as measured with an AFM is preferably less than 30.0 MPa, more preferably 28.0 MPa or less, still more preferably 26.0 MPa or less, is preferably 5.0 MPa or more, more preferably 10.0 MPa or more, still more preferably 15.0 MPa or more, still more preferably 16.0 MPa or more, particularly preferably 18.0 MPa or more, and is, for example, 5.0 MPa or more and less than 30.0 MPa. A packaging bag produced using a laminate including a second adhesive layer with such a modulus of elasticity tends to experience less deterioration in its gas barrier properties even after heat treatment, such as retort treatment. The second adhesive layer with such a modulus of elasticity can be formed, for example, by using a solvent-based adhesive described later and appropriately changing the type and molecular weight of a polymer component contained in a main agent described later, the type of curing agent, the mole ratio (NCO/OH), and aging conditions.

When the second adhesive layer has a modulus of elasticity of the embodiment (A), the modulus of elasticity of the second adhesive layer is lower than the modulus of elasticity of the first adhesive layer. A laminate of such an embodiment tends to have higher tearability, and a packaging bag produced using the laminate tends to have higher openability. The reason for this is considered as described below.

A packaging bag produced using a laminate including a sealant layer is typically produced by stacking two laminates with sealant layers facing each other and heat-sealing end portions of the laminates. When the packaging bag is opened, the two stacked laminates are torn. When one of the two laminates is referred to as a "front laminate" and the other is referred to as a "back laminate", the front laminate is sequentially torn from the first substrate toward the sealant layer, whereas the back laminate is sequentially torn from the sealant layer toward the first substrate.

As described above, the composite modulus of elasticity of the sealant layer is preferably equal to or lower than a certain value (for example, 900 MPa or less), and since the sealant layer is easily deformed, when the back laminate is torn, the sealant layer is first stretched to a certain extent and is then torn, and the other layers are then sequentially torn. When the modulus of elasticity of the second adhesive layer is equal to or lower than a certain value (for example, less than 30.0 MPa), the second adhesive layer is easily deformed, the second adhesive layer follows the elongation of the sealant layer, and the force of tearing the sealant layer is easily transmitted to the second substrate, the first adhesive layer, and the first substrate via the second adhesive layer. That is, in the back laminate, the force of tearing the sealant layer is easily transmitted to the second substrate and other layers and also easily acts as a force of tearing other layers. Consequently, it is thought that the back laminate is also easily torn, and the entire two stacked laminates has high tearability.

When the second adhesive layer has the modulus of elasticity of the embodiment (A), in one embodiment, the second adhesive layer has a thickness of preferably 1.0 $\mu$m or more, more preferably 1.5 $\mu$m or more, still more preferably 2.0 $\mu$m or more, particularly preferably 2.5 $\mu$m or more, and preferably 10.0 $\mu$m or less, more preferably 8.0 $\mu$m or less, still more preferably 6.0 $\mu$m or less, particularly preferably 5.0 $\mu$m or less; for example, 1.0 $\mu$m or more and 10.0 $\mu$m or less. In this embodiment, the thickness of the second adhesive layer relative to the thickness of the entire laminate is preferably 1.0% or more, more preferably 1.5% or more, still more preferably 2.0% or more, particularly preferably 2.5% or more, and is preferably 10.0% or less, more preferably 8.0% or less, still more preferably 6.0% or less, particularly preferably 5.0% or less; for example, 1.0% or more and 10.0% or less. A laminate including a second adhesive layer with a thickness equal to or higher than the lower limit tends to have high laminate strength even after heat treatment.

When the second adhesive layer has the modulus of elasticity of the embodiment (A), in one embodiment, the thickness of the first adhesive layer is larger than the thickness of the second adhesive layer. When a print layer is provided on a surface of the first substrate facing the first adhesive layer, the first adhesive layer can appropriately cover a difference in the level caused by the print layer, and a packaging bag with a good appearance tends to be produced. The ratio of the thickness 1 of the first adhesive layer to the thickness 2 of the second adhesive layer (thickness 1/thickness 2) may be, for example, 0.4 or more, 0.6 or more, or 0.8 or more, and when the first adhesive layer has a larger thickness than the second adhesive layer, the ratio is more than 1.0 and may be 2.5 or less, 1.8 or less, or 1.2 or less

When the second adhesive layer has the modulus of elasticity of the embodiment (A), the modulus of elasticity of the second adhesive layer divided by the thickness of the second adhesive layer is, in one embodiment, preferably 0.5 MPa/$\mu$m or more, more preferably 1 MPa/$\mu$m or more, still more preferably 2 MPa/$\mu$m or more. The modulus of elasticity of the second adhesive layer divided by the thickness of the second adhesive layer is preferably less than 30 MPa/$\mu$m and is preferably 15 MPa/$\mu$m or less, more preferably 10 MPa/$\mu$m or less. The modulus of elasticity of the second adhesive layer divided by the thickness of the second adhesive layer is, for example, 0.5 MPa/$\mu$m or more and less than 30 MPa/$\mu$m. A laminate including such a second adhesive layer tends to have higher tearability, and a packaging bag produced using the laminate tends to have higher openability.

In an embodiment (B), the modulus of elasticity of a cross section of the second adhesive layer as measured with an AFM is preferably 30.0 MPa or more, more preferably 33.0 MPa or more, still more preferably 35.0 MPa or more, is preferably 120 MPa or less, more preferably 110 MPa or less, still more preferably 100 MPa or less, still more preferably 90.0 MPa or less, particularly preferably 80.0 MPa or less, 70.0 MPa or less, 60.0 MPa or less, or 50.0 MPa or less, and is, for example, 30.0 MPa or more and 120 MPa or less. A laminate including a second adhesive layer with a modulus of elasticity equal to or lower than the upper limit tends to have high laminate strength. A second adhesive layer with such a modulus of elasticity can be formed, for example, by using a solvent-free adhesive described later and appropriately changing the type and molecular weight of a polymer component contained in a main agent described later, the type of curing agent, the mole ratio (NCO/OH), and aging conditions.

When the second adhesive layer has the modulus of elasticity of the embodiment (B), in one embodiment, the second adhesive layer has a thickness of preferably 3.0 $\mu$m or less, more preferably 2.5 $\mu$m or less, still more preferably 2.0 $\mu$m or less, still more preferably 1.5 $\mu$m or less, and preferably 0.5 $\mu$m or more, more preferably 0.8 $\mu$m or more, still more preferably 1.0 $\mu$m or more; for example, 0.5 $\mu$m or more and 3.0 $\mu$m or less. In this embodiment, the thickness of the second adhesive layer relative to the thickness of the entire laminate is preferably 0.5% or more, more preferably 0.8% or more, still more preferably 1.0% or more, and is preferably 3.0% or less, more preferably 2.5% or less, still more preferably 2.0% or less, still more preferably 1.5% or less; for example, 0.5% or more and 3.0% or less. In one embodiment, the thickness of the second adhesive layer is smaller than the thickness of the first adhesive layer. A packaging bag produced using a laminate including such a second adhesive layer tends to have high impact resistance and accordingly high resistance to drop-induced package rupture and also have high tearability and accordingly high openability. Furthermore, the packaging bag has, for example, high recyclability.

When the second adhesive layer has the modulus of elasticity of the embodiment (B), the modulus of elasticity of the second adhesive layer divided by the thickness of the second adhesive layer is, in one embodiment, preferably 10 MPa/$\mu$m or more, more preferably 15 MPa/$\mu$m or more, still more preferably 25 MPa/$\mu$m or more. The modulus of elasticity of the second adhesive layer divided by the thickness of the second adhesive layer is preferably 240 MPa/$\mu$m or less, preferably 100 MPa/$\mu$m or less, more preferably 50 MPa/$\mu$m or less. The modulus of elasticity of the second adhesive layer divided by the thickness of the second adhesive layer is, for example, 10 MPa/$\mu$m or more and 240 MPa/$\mu$m or less.

(Adhesive Agent)

Each of the first adhesive layer and the second adhesive layer is formed of an adhesive agent. The adhesive agent that forms the first adhesive layer and the adhesive agent that forms the second adhesive layer may be the same or different. The adhesive agent may be any of a one-component adhesive, a two-component adhesive, and a non-curable adhesive, and is preferably a two-component adhesive from the perspective that the modulus of elasticity described above can be easily adjusted to the range described above.

A method for producing a laminate using an adhesive agent may be a method of applying the adhesive agent to an object, then placing another object on the resulting adhesive layer, and curing the adhesive layer sandwiched therebetween. The object is, for example, a first substrate, a second substrate, or a sealant film. The step of curing the adhesive layer is hereinafter also referred to as an "aging step".

The conditions for aging the adhesive agent are described below. The aging temperature is preferably 25°C or more, more preferably 30°C or more, still more preferably 35°C or more, and is preferably 80°C or less, more preferably 70°C or less, still more preferably 60°C or less. The aging time is preferably 5 hours or more, more preferably 10 hours or more, still more preferably 20 hours or more, and is preferably 150 hours or less, more preferably 135 hours or less, still more preferably 120 hours or less. The modulus of elasticity of the adhesive layer tends to increase with the aging temperature. The modulus of elasticity of the adhesive layer tends to increase with the aging time.

The adhesive agent is, for example, a polyurethane adhesive agent, a polyester adhesive agent, a polyether adhesive agent, a rubber adhesive agent, a vinyl adhesive agent, an olefin adhesive agent, a silicone adhesive agent, an epoxy adhesive agent, or a phenolic adhesive agent. Among these, from the perspective of easily adjusting the modulus of elasticity to the above-described range, a polyurethane adhesive agent, a polyester adhesive agent, and a polyether adhesive agent are preferred, a polyurethane adhesive agent and a polyester adhesive agent are more preferred, a polyurethane adhesive agent is still more preferred, and a two-component polyurethane adhesive agent is particularly preferred.

The adhesive agent may be a solvent-based adhesive or a solvent-free adhesive.

The solvent-based adhesive refers to an adhesive agent used for a method of applying an adhesive agent to an object, heating the adhesive agent in an oven or the like to volatilize a solvent in the adhesive agent, and then bonding the object to another object. In a two-component adhesive, either one or both of the main agent and the curing agent contain a solvent. The solvent is, for example, an organic solvent, more specifically, a hydrocarbon solvent, such as toluene, xylene, n-hexane, or methylcyclohexane; an ester solvent, such as ethyl acetate, n-propyl acetate, n-butyl acetate, or isobutyl acetate; an alcohol solvent, such as methanol, ethanol, isopropyl alcohol, n-butyl alcohol, or isobutyl alcohol; or a ketone solvent, such as acetone, methyl ethyl ketone, methyl isobutyl ketone, or cyclohexanone.

The solvent-free adhesive refers to an adhesive agent used for a method of applying an adhesive agent to an object and then bonding the object to another object without necessarily requiring a step of heating the adhesive agent in an oven or the like to volatilize a solvent. In a two-component adhesive, both the main agent and the curing agent contain substantially no solvent. The phrase "contain substantially no" includes a case where a solvent used as a reaction medium at the time of producing a constituent of an adhesive agent, or a constituent of the main agent and/or the curing agent in the case of a two-component adhesive, is not completely removed, and a trace amount of solvent remains in the adhesive agent or in the main agent and/or the curing agent in the case of a two-component adhesive.

The two-component polyurethane adhesive agent has a main agent and a curing agent. The two-component polyurethane adhesive agent may be of a solvent type or a solvent-free type. The two-component polyurethane adhesive agent will be described below.

The polyurethane adhesive agent has, for example, a main agent containing a polyol compound and a curing agent containing a polyisocyanate compound. A cured product (reaction product) formed by mixing such a main agent and a curing agent is, for example, polyurethane, more specifically, a polyester polyurethane, a polyether polyurethane, a polycarbonate polyurethane, or an acrylic polyurethane.

The polyol compound has two or more hydroxy groups per molecule. The polyol compound is, for example, a polyester polyurethane polyol, a polyester polyol, a polyether polyol, a polycarbonate polyol, or an acrylic polyol. Among these, from the perspective that an adhesive layer with a modulus of elasticity in the above-described range is easily formed, a polyester polyurethane polyol and a polyester polyol are preferred, a polyester polyurethane polyol is more preferred in the case of a solvent-based adhesive, and a polyester polyol is more preferred in the case of a solvent-free adhesive.

The polyester polyurethane polyol is a compound with two or more hydroxy groups, two or more ester bonds, and two or more urethane bonds per molecule, and has, for example, a polyester polyurethane structure as a main backbone. The polyester polyol is a compound with two or more hydroxy groups and two or more ester bonds per molecule, and has, for example, a polyester structure as a main backbone. The polyether polyol is a compound with two or more hydroxy groups and two or more ether bonds per molecule. The polycarbonate polyol is a compound with two or more hydroxy groups and two or more carbonate bonds per molecule.

From the perspective of coatability, a polymer component (for example, a polyol compound) contained in a main agent of a two-component solvent-based adhesive has a weight-average molecular weight (Mw) of preferably 11,000 or more, more preferably 13,000 or more, still more preferably 15,000 or more, still more preferably 18,000 or more, particularly preferably 20,000 or more, and preferably 100,000 or less, more preferably 50,000 or less, still more preferably 40,000 or less. The modulus of elasticity of the adhesive layer tends to increase as the Mw decreases, and the modulus of elasticity of the adhesive layer tends to decrease as the Mw increases.

The polymer component (for example, the polyol compound) contained in the main agent has a polydispersity (Mw/Mn) of preferably 5.0 or less, more preferably 4.5 or less, still more preferably 4.0 or less, and preferably 1.5 or more, more preferably 2.0 or more, still more preferably 2.5 or more. Mn denotes the number-average molecular weight of the polymer component (for example, the polyol compound) contained in the main agent.

The average molecular weight is measured in terms of polystyrene by gel permeation chromatography (GPC) according to JIS K 7252-1: 2016. In the GPC measurement, the measuring apparatus may be HLC-8220GPC (manufactured by Tosoh Corporation), the column may be TSKgel GHM$_{HQ}$-H and TSK guard column H$_{HQ}$-H connected in series, and the eluent may be dimethylformamide (DMF).

From the perspective of coatability, a polymer component (for example, a polyol compound) contained in a main agent of a two-component solvent-free adhesive has a weight-average molecular weight (Mw) of preferably 800 or more, more preferably 1,200 or more, still more preferably 2,000 or more, and preferably 10,000 or less, more preferably 8,000 or less, still more preferably 6,000 or less. The modulus of elasticity of the adhesive layer tends to increase as the Mw decreases, and the modulus of elasticity of the adhesive layer tends to decrease as the Mw increases.

The polymer component (for example, the polyol compound) contained in the main agent has a polydispersity (Mw/Mn) of preferably 2.8 or less, more preferably 2.7 or less, still more preferably 2.6 or less, particularly preferably 2.5 or less, and preferably 1.2 or more, more preferably 1.5 or more, still more preferably 2.0 or more. Mn denotes the number-average molecular weight of the polymer component (for example, the polyol compound) contained in the main agent.

The polyisocyanate compound has two or more isocyanate groups per molecule. The polyisocyanate compound is, for example, an aromatic isocyanate or an aliphatic isocyanate. The polyisocyanate compound may also be a blocked isocyanate compound produced by an addition reaction using a known isocyanate blocking agent by an appropriate traditional method.

The polyisocyanate compound is, for example, an aliphatic isocyanate compound, such as tetramethylene diisocyanate, hexamethylene diisocyanate (HDI), norbornene diisocyanate, or isophorone diisocyanate (IPDI); an aromatic isocyanate compound, such as diphenylmethane diisocyanate, hydrogenated diphenylmethane diisocyanate, xylylene diisocyanate (XDI), hydrogenated xylylene diisocyanate, tolylene diisocyanate (TDI), naphthalene diisocyanate, or $\alpha,\alpha,\alpha',\alpha'$-tetramethyl-m-xylylene diisocyanate; a dimer or a trimer (for example, an isocyanurate) derived from these compounds; or an adduct, a biuret, or an allophanate produced by reacting these compounds with a low-molecular-weight active hydrogen compound, an alkylene oxide adduct thereof, or a high-molecular-weight active hydrogen compound.

The low-molecular-weight active hydrogen compound is, for example, ethylene glycol, propylene glycol, diethylene glycol, dipropylene glycol, 1,4-butanediol, neopentyl glycol, 1,6-hexamethylene glycol, 1,8-octamethylene glycol, 1,4-cyclohexanedimethanol, m-xylylene alcohol, 1,3-bishydroxyethylbenzene, 1,4-bishydroxyethylbenzene, trimethylolethane, trimethylolpropane, glycerol, pentaerythritol, erythritol, sorbitol, ethylenediamine, monoethanolamine, diethanolamine, triethanolamine, or m-xylylenediamine, preferably trimethylolpropane. The high-molecular-weight active hydrogen compound is, for example, a polyester, a polyether polyol, or a polyamide.

The main agent containing the polyol compound and the curing agent containing the polyisocyanate compound are preferably used, for example, in such a quantitative ratio that the mole ratio (NCO/OH) of all the isocyanate groups of the polyisocyanate compound to all the hydroxy groups of the polyol compound is as described below. That is, the mole ratio (NCO/OH) is preferably 0.5 or more, more preferably 1.0 or more, still more preferably 1.5 or more, and is preferably 8.0 or less, more preferably 6.0, still more preferably 5.0 or less, and, in the case of a solvent-free adhesive, is still more preferably 4.0 or less, particularly preferably 3.0 or less. As the mole ratio (NCO/OH) increases, the modulus of elasticity of the adhesive layer tends to increase, and as the mole ratio (NCO/OH) decreases, the modulus of elasticity of the adhesive layer tends to decrease.

[Packaging Bag]

A laminate according to the present disclosure is suitably used as a packaging material. The packaging material is used to produce a packaging bag. A packaging bag according to the present disclosure includes the laminate described above. A laminate according to the present disclosure can be used as a packaging material to produce a packaging bag. In one embodiment, a packaging bag can be produced by folding a laminate according to the present disclosure in half such that a first substrate is positioned on the outside and a sealant layer is positioned on the inside, and heat-sealing an end portion or the like of the laminate. In another embodiment, a packaging bag can be produced by stacking a plurality of laminates according to the present disclosure with sealant layers facing each other, and heat-sealing an end portion or the like of the laminates. The packaging bag may be entirely constituted by the laminate, or the packaging bag may be partially constituted by the laminate.

The packaging bag may have various forms, for example, a standing pouch type, a side seal type, a two-sided seal type, a three-sided seal type, a four-sided seal type, an envelope seal type, a butt seal type (pillow seal type), a ribbed seal type, a flat bottom seal type, a square bottom seal type, or a gusset type. The heat sealing method is, for example, bar sealing, rotating roll sealing, belt sealing, impulse sealing, high-frequency sealing, or ultrasonic sealing.

The packaging bag may have an easy-to-open portion. The easy-to-open portion is, for example, a notch portion serving as a starting point for tearing a packaging bag, or a half-cut line formed using laser processing, a cutter, or the like as a tear line for a packaging bag.

The packaging bag may have a venting mechanism. The venting mechanism is configured to allow the inside of the packaging bag to communicate with the outside to release the vapor when the vapor pressure in the packaging bag reaches a predetermined value or more, and is also configured to suppress the release of the vapor at a portion other than the venting mechanism. The venting mechanism includes, for example, a venting seal portion protruding from a side seal portion toward the inside of the packaging bag and an unsealed portion separated from a content storage portion by the venting seal portion. The unsealed portion communicates with the outside of the packaging bag. The packaging bag in which the contents are filled and the opening is heat-sealed is heated using a microwave oven or the like. This increases the internal pressure and separates the venting seal portion. The vapor is released to the outside of the packaging bag through the separated portion of the venting seal portion and through the unsealed portion.

The contents to be contained in a packaging bag include, for example, a liquid, a solid, a powder, or a gel. The contents may be a food or drink or may be a non-food or non-drink, such as a chemical product, a cosmetic product, a pharmaceutical agent, a metal component, or an electronic component. After the contents are stored in a packaging bag, the opening of the packaging bag can be heat-sealed to seal the packaging bag.

The contents may be retort food or boiled food. A packaging bag according to the present disclosure may be a pouch for storing retort food or boiled food.

As specific examples of the packaging bag, a pouch and a standing pouch will be described below.

The pouch is a small-sized packaging bag and is used to store, for example, 1 g or more and 200 g or less of contents. The contents to be stored in a pouch include, for example, sauce, soy sauce, dressing, ketchup, syrup, cooking alcohol, or another liquid or viscous seasoning; liquid soup, powdered soup, or fruit juice; spice; pet food; liquid beverage, jelly beverage, instant food, or another food or drink; or non-food, such as a chemical product, a cosmetic product, a pharmaceutical agent, a metal component, or an electronic component.

A standing pouch is used, for example, to store 50 g or more and 2,000 g or less of contents. The contents to be stored in a standing pouch include, for example, shampoo, rinse, conditioner, hand soap, body soap, aromatic, deodorant, deodorizer, insect repellent, or detergent; dressing, edible oil, mayonnaise, or another liquid or viscous seasoning; liquid beverage, jelly beverage, instant food, or another food or drink; pet food; cream; a metal component, or an electronic component.

In one embodiment, the contents of a packaging bag include pet food.

In one embodiment, because the deterioration of the gas barrier properties can be suppressed even when subjected to heat treatment, a packaging bag according to the present disclosure is suitable as a pouch subjected to retort treatment (hereinafter also referred to as a "retort pouch") or a pouch subjected to boiling treatment (hereinafter also referred to as a "boiling pouch"), or as a microwavable packaging bag. A packaging bag according to the present disclosure is also suitable as a microwave boiling or retort pouch. The microwavable packaging bag refers to a packaging bag that can be heated with a microwave oven.

The retort pouch is a packaging bag that is filled with contents, such as food and drink, is sealed, and is then subjected to heat sterilization treatment (retort treatment) with water or water vapor at a temperature of more than 100°C under pressure. The boiling pouch is a packaging bag that is filled with contents, such as food and drink, is sealed, and is then subjected to boiling treatment at a temperature of 100°C or less.

In one embodiment, a packaging bag according to the present disclosure is a retort pouch. The retort treatment may be performed under various conditions, and the retort pouch includes any pouch subjected to a general retort treatment. For example, a retort treatment with a treatment temperature of 105°C or more and 115°C or less may be referred to as a semi-retort treatment, a retort treatment with a treatment temperature of more than 115°C and 121°C or less may be referred to as a retort treatment, and a retort treatment with a treatment temperature of more than 121°C and 140°C or less may be referred to as a high retort treatment.

The retort treatment time is, for example, 5 minutes or more and 60 minutes or less, preferably 15 minutes or more and 40 minutes or less.

In one embodiment, a packaging bag according to the present disclosure is a retort pouch.

In one embodiment, a retort pouch according to the present disclosure preferably has an oxygen permeability (unit: $cc/m^2 \cdot day \cdot atm$) of 2.0 or less, more preferably 1.5 or less, still more preferably 1.3 or less, particularly preferably 1.0 or less. The oxygen permeability is measured in accordance with JIS K 7126-2: 2006 at a temperature of 23°C and a relative humidity of 90%. The lower limit of the oxygen permeability is preferably as low as possible and may be, for example, 0.1.

Fig. 18 illustrates a packaging bag 50 produced by bonding two laminates. The hatched area indicates a heat-sealed portion. The packaging bag 50 may have an easy-to-open portion 51. The easy-to-open portion 51 is, for example, a notch portion 52 serving as a starting point for tearing, or a half-cut line 53 formed using laser processing, a cutter, or the like as a tear line.

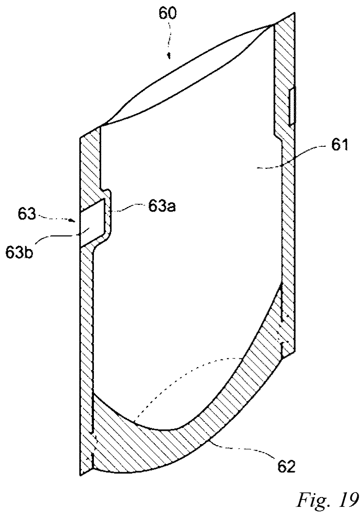

Fig. 19 schematically illustrates an example of the structure of a standing pouch. The hatched area indicates a heat-sealed portion. In one embodiment, a standing pouch 60 includes a trunk (side sheet) 61 and a bottom portion (bottom sheet) 62. The side sheet 61 and the bottom sheet 62 may be composed of the same member or different members. The bottom sheet 62 can maintain the shape of the side sheet 61 and make the pouch free-standing, thus forming a pouch of standing type. A storage space for storing contents is formed in a region surrounded by the side sheet 61 and the bottom sheet 62.

The standing pouch 60 may have a venting mechanism 63. The venting mechanism 63 includes a venting seal portion 63a protruding from the side seal portion toward the inside of the packaging bag, and an unsealed portion 63b separated from a content storage portion by the venting seal portion 63a. The unsealed portion 63b communicates with the outside of the packaging bag.

In the standing pouch, only the trunk may be composed of a laminate according to the present disclosure, only the bottom portion may be composed of the laminate, or both the trunk and the bottom portion may be composed of the laminate.

In one embodiment, the side sheet can be formed by making a bag such that a sealant layer of a laminate according to the present disclosure is the innermost layer. In one embodiment, the side sheet can be formed by preparing two laminates according to the present disclosure, stacking these laminates with sealant layers facing each other, and heat-sealing side edge portions on both sides of the laminates to make a bag.

In another embodiment, the side sheet can be formed by preparing two laminates according to the present disclosure, stacking these laminates with sealant layers facing each other, inserting two laminates folded in a V shape with the sealant layers being on the outside between the laminates in the side edge portions on both sides of the stacked laminates, and heat-sealing the laminates. A standing pouch with a trunk having a side gusset can be produced in this way.

In one embodiment, the bottom sheet can be formed by inserting a laminate between lower portions of side sheets made into a bag and heat-sealing them. More specifically, the bottom sheet can be formed by inserting a laminate folded in a V shape with a sealant layer being on the outside between lower portions of side sheets made into a bag and heat-sealing them.

In one embodiment, the bottom portion is formed by preparing two laminates, stacking these laminates with sealant layers facing each other, folding another laminate into a V shape with a sealant layer being on the outside, placing the other laminate between the lower portions of the laminates facing each other, and heat-sealing them. Two sides adjacent to the bottom portion are then heat-sealed to form a trunk. Thus, a standing pouch according to one embodiment can be formed.

The present disclosure relates to, for example, the following [1] to [14].

[1] A laminate including a first substrate, a first adhesive layer, a second substrate, a second adhesive layer, and a sealant layer in this order in a thickness direction, wherein the first substrate includes a stretched substrate containing polypropylene as a main component, the second substrate includes a stretched substrate containing polypropylene as a main component, the sealant layer contains polypropylene as a main component, a cross section of the first adhesive layer has a modulus of elasticity of 30.0 MPa or more as measured with an atomic force microscope (AFM), and the first adhesive layer has a thickness of 0.5 $\mu$m or more and 3.0 $\mu$m or less.

[2] The laminate according to [1], wherein a cross section of the second adhesive layer has a modulus of elasticity of less than 30.0 MPa as measured with an atomic force microscope (AFM).

[3] The laminate according to [2], wherein the thickness of the first adhesive layer is larger than the thickness of the second adhesive layer.

[4] The laminate according to [1], wherein a cross section of the second adhesive layer has a modulus of elasticity of 30.0 MPa or more as measured with an atomic force microscope (AFM).

[5] The laminate according to [4], wherein the thickness of the second adhesive layer is smaller than the thickness of the first adhesive layer.

[6] The laminate according to any one of [1] to [5], wherein the second adhesive layer has a thickness of 0.5 $\mu$m or more and 10.0 $\mu$m or less.

[7] The laminate according to any one of [1] to [6], wherein at least one selected from the first substrate and the second substrate is a barrier substrate further including an inorganic oxide layer.

[8] The laminate according to [7], wherein the barrier substrate further includes a covering layer on a surface of the inorganic oxide layer opposite a surface facing the stretched substrate.

[9] The laminate according to [7] or [8], wherein the first substrate is the stretched substrate, the second substrate is the barrier substrate including the stretched substrate and the inorganic oxide layer, and the second substrate is disposed such that the inorganic oxide layer faces the first adhesive layer and the stretched substrate faces the second adhesive layer.

[10] The laminate according to [7] or [8], wherein the first substrate is the barrier substrate including the stretched substrate and the inorganic oxide layer, the first substrate is disposed such that the inorganic oxide layer faces the first adhesive layer and the stretched substrate faces the outside, and the second substrate is the stretched substrate.

[11] The laminate according to any one of [1] to [10], wherein a polypropylene content relative to a total amount of resin material in the laminate is 80% by mass or more.

[12] The laminate according to any one of [1] to [11], wherein the laminate is a packaging material.

[13] A packaging bag including the laminate according to any one of [1] to [12].

[14] The packaging bag according to [13], wherein the packaging bag is a pouch for storing retort food or boiled food.

[EXAMPLES]

A laminate and a packaging bag according to the present disclosure will be more specifically described below based on specific examples.

[Production of Transparent Barrier Substrate]

An acrylic resin with a hydroxy group (number-average molecular weight: 25,000, glass transition temperature: 99°C, hydroxyl value: 80 mg KOH/g) was diluted with a mixed solvent of methyl ethyl ketone and ethyl acetate (mixing ratio: 1:1) to a solid concentration of 10% by mass to prepare a main agent. An ethyl acetate solution containing tolylene diisocyanate (solid content: 75% by mass) was added to the main agent as a curing agent to prepare a solution for forming a surface coating layer. The amount of the curing agent used was 10 parts by mass per 100 parts by mass of the main agent.

A biaxially stretched polypropylene film with a corona-treated surface and with a thickness of 20 $\mu$m (ME-1 manufactured by Mitsui Chemicals Tohcello, Inc.) was prepared. The solution for forming a surface coating layer was applied to the corona-treated surface of the film and was dried to form a surface coating layer with a thickness of 0.5 $\mu$m. Thus, a resin substrate was produced.

A carbon-containing silicon oxide (silica) deposited film with a thickness of 12 nm was formed on the surface coating layer of the resin substrate using a low-temperature plasma chemical vapor deposition apparatus as a real apparatus (a CVD method) while applying tension to the resin substrate by roll-to-roll. The conditions for forming the deposited film were as described below.

(Formation Conditions)

- Hexamethyldisiloxane:oxygen gas:helium = 1:10:10 (unit: slm)

- Electricity supplied to cooling/electrode drum: 22 kW

- Line speed: 100 m/min

The carbon content C, the silicon content Si, and the oxygen content O of a carbon-containing silicon oxide deposited film were measured. The carbon content C, the silicon content Si, and the oxygen content O were 32.7%, 29.8%, and 37.5%, respectively, relative to the total (100%) of the three elements of silicon, oxygen, and carbon. These element contents were measured by X-ray photoelectron spectroscopy (XPS) using narrow scan analysis under the above-described measurement conditions.

385 g of water, 67 g of isopropyl alcohol, and 9.1 g of 0.5 N hydrochloric acid were mixed to prepare a solution with a pH of 2.2. This solution was mixed with 175 g of tetraethoxysilane as a metal alkoxide and 9.2 g of glycidoxypropyltrimethoxysilane as a silane coupling agent while cooling to 10°C to prepare a solution A. 14.7 g of poly(vinyl alcohol) with a degree of saponification of 99% or more and a degree of polymerization of 2,400 as a water-soluble polymer, 324 g of water, and 17 g of isopropyl alcohol were mixed to prepare a solution B. The solution A and the solution B were mixed at 6.5:3.5 based on mass (solution A:solution B) to prepare a barrier coating agent. The barrier coating agent was applied by a spin coating method to the deposited film formed on the resin substrate and was heat-treated in an oven at 80°C for 60 seconds to form a barrier coating layer with a thickness of 300 nm.

A transparent barrier substrate thus produced included a biaxially stretched polypropylene film with a thickness of 20 $\mu$m, a surface coating layer with a thickness of 0.5 $\mu$m, a carbon-containing silicon oxide (silica) deposited film with a thickness of 12 nm, and a barrier coating layer with a thickness of 300 nm in this order.

[Adhesive Agent]

A two-component adhesive composed of the following main agent and curing agent was used.

- Adhesive agent A

 Main agent: polyester polymer (Mw: 3,500)

 Curing agent: a mixture of IPDI and HDI (the HDI content is higher than the IPDI content)

 Mole ratio of main agent to curing agent (NCO/OH): 2

 The adhesive agent A contains substantially no solvent.

- Adhesive agent B

 Main agent: polyester polymer (Mw: 4,000)

 Curing agent: a mixture of HDI and XDI

 Mole ratio of main agent to curing agent (NCO/OH): 2

 The adhesive agent B contains substantially no solvent.

- Adhesive agent C

 Main agent: polyester polyurethane polymer (Mw: 30,000)

 Curing agent: a mixture of an isophorone diisocyanate (IPDI) trimer and a trimethylolpropane (TMP) adduct of xylylene diisocyanate (XDI)

 Mole ratio of main agent to curing agent (NCO/OH): 4

 The adhesive agent C contains ethyl acetate as a solvent.

[Example 1]

A biaxially stretched polypropylene film (manufactured by Toyobo Co., Ltd., P2171, hereinafter also referred to as a "BOPP film") with a corona-treated surface and with a thickness of 20 μm was prepared as a first substrate.
The transparent barrier substrate described above was prepared as a second substrate.
An unstretched polypropylene film (manufactured by Okamoto Industries, Inc., ET-20, hereinafter also referred to as a "CPP film") with a corona-treated surface and with a thickness of 60 μm was prepared as a sealant layer.
A print layer with a coating thickness of 1 μm (dry) was formed by a gravure roll coating method on the corona-treated surface of the BOPP film serving as the first substrate. The adhesive agent A was applied to the print layer by the gravure roll coating method, and the surface of the adhesive layer formed on the first substrate and the surface of the barrier coating layer of the transparent barrier substrate were bonded together and were aged at 40°C for 72 hours. The first adhesive layer thus formed had a thickness of 1.35 μm. Furthermore, the non-barrier coating layer surface of the transparent barrier substrate was subjected to a corona treatment, the adhesive agent C was applied by the gravure roll coating method, and the surface of the adhesive layer formed on the transparent barrier substrate and the corona-treated surface of the CPP film were bonded together and were aged at 40°C for 72 hours. The second adhesive layer thus formed had a thickness of 3.15 μm.
Thus, a laminate according to Example 1 was produced. The laminate has a layer configuration of BOPP film (20 μm)/print layer (1 μm)/adhesive layer (1.35 μm)/transparent barrier substrate (21 μm)/adhesive layer (3.15 μm)/CPP film (60 μm). Each value in parentheses indicates the thickness of the corresponding layer.

[Examples 2 and 3]

Laminates according to Examples 2 and 3 were produced in the same manner as in Example 1 except that the type of adhesive agent and/or the thickness of the second adhesive layer were changed as shown in Table 1.

[Example 4]

A biaxially stretched polypropylene film (manufactured by Toyobo Co., Ltd., P2171, BOPP film) with a corona-treated surface and with a thickness of 20 μm was prepared as a first substrate in the same manner as in Example 1.
A biaxially stretched polypropylene film (manufactured by Toyobo Co., Ltd., P2271, BOPP film) with both surfaces thereof subjected to corona treatment and with a thickness of 20 μm was prepared as a second substrate.
An unstretched polypropylene film (manufactured by Okamoto Industries, Inc., ET-20, CPP film) with a corona-treated surface and with a thickness of 60 μm was prepared as a sealant layer in the same manner as in Example 1.
A print layer with a coating thickness of 1 μm (dry) was formed by a gravure roll coating method on the corona-treated surface of the BOPP film serving as the first substrate. The adhesive agent A was applied to the print layer by the gravure roll coating method, and the surface of the adhesive layer formed on the first substrate and one surface of the BOPP film serving as the second substrate were bonded together and were aged at 40°C for 72 hours. The first adhesive layer thus formed had a thickness of 1.35 μm. Furthermore, the adhesive agent C was applied to the other surface of the BOPP film serving as the second substrate by the gravure roll coating method, and the adhesive layer surface formed on the BOPP film serving as the second substrate and the corona-treated surface of the CPP film were bonded together and were aged at 40°C for 72 hours. The second adhesive layer thus formed had a thickness of 3.15 μm.
Thus, a laminate according to Example 4 was produced. The laminate has a layer configuration of BOPP film (20 μm)/print layer (1 μm)/adhesive layer (1.35 μm)/BOPP film (20 μm)/adhesive layer (3.15 μm)/CPP film (60 μm). Each value in parentheses indicates the thickness of the corresponding layer.

[Comparative Example 1]

A laminate according to Comparative Example 1 was produced in the same manner as in Example 1 except that the type of adhesive agent and/or the thickness of the first adhesive layer were changed as shown in Table 1.
Although all of the laminates of Examples 1 to 4 and Comparative Example 1 described above include a print layer, a laminate without the print layer may be employed instead of the laminates of Examples 1 to 4 and Comparative Example 1.
The laminates of Examples 1 to 4 and Comparative Example 1 were subjected to retort sterilization under retort conditions of 121°C, 30 minutes, and 0.21 MPa. The laminates after the retort sterilization were used to measure the modulus of elasticity of the adhesive layer and the composite modulus of elasticity of the sealant layer and to evaluate the tearability, as described below.

[Measurement of Modulus of elasticity of Adhesive Layer]

For the laminates after the retort sterilization, force curve measurement was performed with an atomic force microscope (AFM) to determine the modulus of elasticity of a cross section of the adhesive layer from the resulting force curve.
A specific measurement procedure is as described below.
A block in which each laminate after the retort sterilization was embedded in an embedding resin was prepared and was cut with a commercially available rotary microtome in a room temperature (25°C) environment to prepare a cross section of the laminate. The cross section is prepared by cutting in the thickness direction perpendicular to the main surface of the laminate. Finishing was performed with a diamond knife.
Using an atomic force microscope (AFM), mapping measurement was performed on a 2.5 μm square including a cross section of the adhesive layer with respect to the cross section. In the cross section of the adhesive layer, 20 force curves with which an appropriate force curve shape was obtained were selected. The modulus of elasticity was calculated by fitting each force curve according to the Johnson-Kendall-Roberts (JKR) theory to calculate the arithmetic mean of 20 elastic moduli (hereinafter also referred to as a "first arithmetic mean"). The force curve was selected near the central portion of the adhesive layer in the thickness direction in a portion where the cross section of the adhesive layer was exposed. Three elastic moduli close to the first arithmetic mean were selected from the 20 elastic moduli to calculate an arithmetic mean of the three elastic moduli (hereinafter also referred to as a "second arithmetic mean"). The second arithmetic mean was defined as the modulus of elasticity of a cross section of the adhesive layer.
Details of the measurement conditions for the AFM are described below.

(Measurement of Modulus of Elasticity with AFM)

- Apparatus name: SPM-9700HT (manufactured by Shimadzu Corporation)

- Measurement atmosphere: in the atmosphere, at room temperature (25°C)

- Measurement mode: contact mode

- Calibration method: measuring cantilever sensitivity using glass

- Number of measurement points: 64 x 64 points (4096 points in total)

- Viewing angle range: 2.5 $\mu$m square

- Cantilever type: CONTR (manufactured by NanoWorld)

- Tip radius of cantilever: < 8 nm

- Spring constant of cantilever: 0.2 N/m

- Contact pressure: 0.5 V

- Scanning speed: 3 Hz

- Elastic modulus calculation model: Johnson-Kendall-Roberts (JKR) theory

- Poisson's ratio of sample: 0.4

- Analysis software: Nano 3D Mapping (manufactured by Shimadzu Corporation)

[Measurement of Composite Modulus of Elasticity of Sealant Layer]

The composite modulus of elasticity ($E_r$) of the sealant layer was determined based on the nanoindentation method using a nanoindenter ("TI950 TriboIndenter" manufactured by Bruker AXS K.K.) with a cross section of the sealant layer as a measured surface. A Berkovich indenter (triangular pyramid indenter; Berkovich_TI0039) was used as an indenter of the nanoindenter in the measurement. The indenter was pressed into an exposed cross section of the sealant layer at three positions in the thickness direction of the sealant layer: a position 2 $\mu$m inward from the interface with the adhesive layer, a position near the central portion, and a position 2 $\mu$m inward from the sealing surface. A load control method (indentation load: 30 $\mu$N, loading for 3 seconds/holding for 5 seconds/unloading for 3 seconds) was adopted as the measurement conditions.

A specific measurement procedure is as described below.

A block in which each laminate after the retort sterilization was embedded in an embedding resin was prepared and was cut with a commercially available rotary microtome in a room temperature (25°C) environment to prepare a cross section of the laminate. The cross section is prepared by cutting in the thickness direction perpendicular to the main surface of the laminate. Finishing was performed with a diamond knife.

The indenter was pushed into the sealant layer from the cross section of the sealant layer to an indentation load of 30 $\mu$N over 3 seconds, and this state was held for 5 seconds. This was followed by unloading for 3 seconds. Thus, the maximum load $P_{max}$, the projected contact area $A_p$ at the maximum depth, and a load-displacement curve were obtained, and the composite modulus of elasticity was calculated from the load-displacement curve. The measurement was performed in a room temperature (23°C) environment.

The measurement was performed at five or more points on the same cross section, and the composite modulus of elasticity $E_r$ was defined as an arithmetic mean of values measured at five points with high reproducibility.

[Evaluation of Tearability]

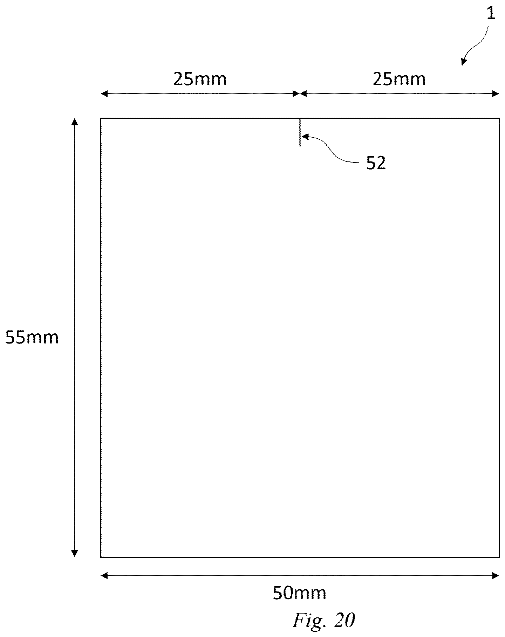

As illustrated in Fig. 20, a laminate 1 after the retort sterilization was cut into a size of 55 mm in the machine direction (MD direction) x 50 mm in the transverse direction (TD direction), and a notch portion 52 was formed by making a linear cut (I notch) with a length of 5 mm at the central portion of the upper end in the left-right direction (a position located 25 mm from the left end and the right end) to prepare a test specimen. Two test specimens were prepared.

The two test specimens were stacked with the surfaces of the sealant layers facing each other so that the positions of the notch portions of the test specimens coincided with each other in a plan view. The two test specimens were torn together by hand in the machine direction (MD direction) with the notch portion as a base point. The ease of tearing was evaluated based on the following criteria A to E.

A: The test specimens were not caught at the beginning of tearing and could be torn without applying an excessive force even after the beginning of tearing.

B: The test specimens were slightly caught between the first substrate and the second substrate on the front side of the test specimens at the beginning of tearing but could be torn without applying an excessive force after the beginning of tearing.

C: The test specimens were slightly caught between the first substrate and the second substrate on the front side of the test specimens at the beginning of tearing and gradually became difficult to tear while being torn.

D: The test specimens were slightly caught between the first substrate and the second substrate on the front side of the test specimens at the beginning of tearing and, after the beginning of tearing, were caught between the second substrate and the sealant layer on the back side of the test specimens, so that the sealant layer was stretched and was not easily torn.

E: The test specimens were caught between the first substrate and the second substrate on the front side of the test specimens both at the beginning of tearing and after the beginning of tearing and could not be torn unless an excessive force was applied.

The first substrate, the second substrate, and the sealant layer in the laminates of Examples 1 to 4 and Comparative Example 1 were subjected to retort sterilization under retort conditions of 121°C, 30 minutes, and 0.21 MPa.
The thermal shrinkage ratio of the first substrate after the retort sterilization in the MD direction was calculated using the following formula.
Thermal shrinkage ratio (%) of first substrate after retort sterilization in MD direction = (length of first substrate before retort sterilization in MD direction - length of first substrate after retort sterilization in MD direction)/length of first substrate before retort sterilization in MD direction x 100
The thermal shrinkage ratio of the second substrate after the retort sterilization in the MD direction and the thermal shrinkage ratio of the sealant layer after the retort sterilization in the MD direction were also calculated in the same manner.
Furthermore, the following mesopentad fraction and ethylene content were measured for the polypropylene stretched substrates constituting the first substrate and the second substrate after the retort sterilization.

[Measurement of Mesopentad Fraction and Ethylene Content]

The polypropylene stretched substrates were dissolved in the following solvent to measure a $^{13}$C-NMR spectrum using the following apparatus under the following conditions.

(Measurement of $^{13}$C-NMR Spectrum)

- Apparatus: manufactured by Bruker, AVANCE NEO700

- Probe: 5 mm$\phi$ CPDCH

- Nucleus observed: $^{13}$C (176.1 MHz)

- Solvent: 1,1,2,2,-tetrachloroethane-d$_2$

- Concentration: 60 mg/0.6 mL

- Number of integrations: 2048

- Temperature: 130°C

- Pulse width: 3.3 microseconds

- Observation time: 1.6 seconds

- Waiting time: 1.4 seconds

- Measurement mode: power-gated decoupling

Each peak in a spectrum derived from a methyl group was assigned using five consecutive propylene units (mmmm) at 21.86 ppm as a reference, the area of each peak was determined, and the ratio of the area of the peak at 21.86 ppm to the area of all peaks derived from the methyl group was defined as the mesopentad fraction of the polypropylene stretched substrate.

When the polypropylene constituting the polypropylene stretched substrate is a copolymer of polypropylene and ethylene, a peak derived from a methyl group contained in a propylene unit adjacent to an ethylene unit is observed at 20.9 ppm. When such a peak was observed, the ratio of the area of the peak at 20.9 ppm to the area of all peaks derived from the methyl group divided by 2 was defined as the ethylene content of the polypropylene stretched substrate. The reason for dividing by two is that there are two propylene units adjacent to one ethylene unit. On the other hand, when the peak was not observed, the ethylene content of the polypropylene stretched substrate was defined as 0.00% by mole.

[Table 1]

| Table 1 | | Example 1 | Example 2 | Example 3 | Example 4 | Comparative example 1 |
|---|---|---|---|---|---|---|
| First sub-strate | Thickness [μm] | 20 | 20 | 20 | 20 | 20 |
| | Thermal shrinkage ratio [%] | 1.34 | 1.34 | 1.34 | 1.34 | 1.34 |
| | Mesopentad fraction [mol%] | 96.91 | 96.91 | 96.91 | 96.91 | 96.91 |
| | Ethylene content [mol%] | 0.00 | 0.00 | 0.00 | 0.00 | 0.00 |
| First adhesive layer | Type | Adhesive agent A | Adhesive agent B | Adhesive agent B | Adhesive agent A | Adhesive agent C |
| | Modulus of elasticity [MPa] | 66.5 | 35.3 | 35.3 | 66.5 | 20.0 |
| | Thickness [μm] | 1.35 | 1.35 | 1.35 | 1.35 | 3.60 |
| | Modulus of elasticity /thickness [MPa/μm] | 49.26 | 26.15 | 26.15 | 49.26 | 5.56 |
| Second substrate | Thickness [μm] | 21 | 21 | 21 | 20 | 21 |
| | Thermal shrinkage ratio [%] | 2.44 | 2.44 | 2.44 | 1.34 | 2.44 |
| | Mesopentad fraction [mol%] | 96.86 | 96.86 | 96.86 | 96.91 | 96.86 |
| | Ethylene content [mol%] | 1.05 | 1.05 | 1.05 | 0.00 | 1.05 |
| Second adhesive layer | Type | Adhesive agent C | Adhesive agent C | Adhesive agent B | Adhesive agent C | Adhesive agent C |
| | Modulus of elasticity [MPa] | 20.0 | 20.0 | 35.3 | 20.0 | 20.0 |
| | Thickness [μm] | 3.15 | 3.15 | 1.35 | 3.15 | 3.15 |
| | Modulus of elasticity /thickness [MPa/μm] | 6.35 | 6.35 | 26.15 | 6.35 | 6.35 |

(continued)

| Table 1 | | Example 1 | Example 2 | Example 3 | Example 4 | Comparative example 1 |
|---|---|---|---|---|---|---|
| Sealant layer | Thickness [μm] | 60 | 60 | 60 | 60 | 60 |
| | Thermal shrinkage ratio [%] | 0.36 | 0.36 | 0.36 | 0.36 | 0.36 |
| | Composite modulus of elasticity [MPa] | 847.70 | 847.70 | 847.70 | 847.70 | 847.70 |
| | Composite modulus of elasticity/thickness [MPa/μm] | 14.13 | 14.13 | 14.13 | 14.13 | 14.13 |
| Tearability | | B | C | D | A | E |

Reference Signs List

1       laminate
10      polypropylene stretched substrate
20      barrier substrate
21      polypropylene layer
22      polypropylene stretched substrate
23      surface coating layer
24      inorganic oxide layer
25      covering layer
26      surface resin layer
27      adhesive resin layer
30      sealant layer
40A, 40B    adhesive layer
50      packaging bag
51      easy-to-open portion
52      notch portion
53      half-cut line
60      standing pouch
61      trunk (side sheet)
62      bottom portion (bottom sheet)
63      venting mechanism
63a     venting seal portion
63b     unsealed portion

**Claims**

1.  A laminate comprising:

    a first substrate;
    a first adhesive layer;
    a second substrate;
    a second adhesive layer; and
    a sealant layer
    in this order in a thickness direction,
    the first substrate includes a stretched substrate containing polypropylene as a main component,
    the second substrate includes a stretched substrate containing polypropylene as a main component,
    the sealant layer contains polypropylene as a main component,
    a cross section of the first adhesive layer has a modulus of elasticity of 30.0 MPa or more as measured with an atomic force microscope (AFM), and the first adhesive layer has a thickness of 0.5 μm or more and 3.0 μm or less.

2. The laminate according to claim 1, wherein a cross section of the second adhesive layer has a modulus of elasticity of less than 30.0 MPa as measured with an atomic force microscope (AFM).

3. The laminate according to claim 2, wherein the thickness of the first adhesive layer is larger than the thickness of the second adhesive layer.

4. The laminate according to claim 1, wherein a cross section of the second adhesive layer has a modulus of elasticity of 30.0 MPa or more as measured with an atomic force microscope (AFM).

5. The laminate according to claim 4, wherein the thickness of the second adhesive layer is smaller than the thickness of the first adhesive layer.

6. The laminate according to any one of claims 1 to 5, wherein the second adhesive layer has a thickness of 0.5 $\mu$m or more and 10.0 $\mu$m or less.

7. The laminate according to any one of claims 1 to 6, wherein at least one selected from the first substrate and the second substrate is a barrier substrate further comprising an inorganic oxide layer.

8. The laminate according to claim 7, wherein the barrier substrate further comprises a covering layer on a surface of the inorganic oxide layer opposite a surface facing the stretched substrate.

9. The laminate according to claim 7 or 8, wherein

the first substrate is the stretched substrate,
the second substrate is the barrier substrate including the stretched substrate and the inorganic oxide layer, and
the second substrate is disposed such that the inorganic oxide layer faces the first adhesive layer and the stretched substrate faces the second adhesive layer.

10. The laminate according to claim 7 or 8, wherein

the first substrate is the barrier substrate including the stretched substrate and the inorganic oxide layer, the first substrate is disposed such that the inorganic oxide layer faces the first adhesive layer and the stretched substrate faces the outside, and
the second substrate is the stretched substrate.

11. The laminate according to any one of claims 1 to 10, wherein a polypropylene content relative to a total amount of resin material in the laminate is 80% by mass or more.

12. The laminate according to any one of claims 1 to 11, wherein the laminate is a packaging material.

13. A packaging bag comprising the laminate according to any one of claims 1 to 12.

14. The packaging bag according to claim 13, wherein the packaging bag is a pouch for storing retort food or boiled food.

*Fig. 1*

*Fig. 2*

*Fig. 3*

*Fig. 4*

*Fig. 5*

*Fig. 6*

Fig. 7

Fig. 8

1

10
40A
25
24
26
27
22
21
40B
30

20

*Fig. 9*

1

22
24
40A
10
40B
30

20

*Fig. 10*

Fig. 11

Fig. 12

Fig. 13

Fig. 14

Fig. 15

Fig. 16

*Fig. 17*

*Fig. 18*

*Fig. 19*

1

25mm | 25mm

52

55mm

50mm

*Fig. 20*

# EP 4 663 406 A1

## INTERNATIONAL SEARCH REPORT

| | International application No. |
|---|---|
| | **PCT/JP2024/004176** |

### A. CLASSIFICATION OF SUBJECT MATTER

*B32B 27/32*(2006.01)i; *B32B 7/022*(2019.01)i; *B32B 7/027*(2019.01)i; *B32B 7/12*(2006.01)i; *B32B 27/00*(2006.01)i; *B65D 33/00*(2006.01)i; *B65D 65/40*(2006.01)i; *C08J 7/00*(2006.01)i; *C08J 7/043*(2020.01)i; *C08J 7/048*(2020.01)i
FI: B32B27/32 Z; B32B7/022; B32B7/027; B32B7/12; B32B27/00 H; B32B27/32 E; B32B27/32 103; B65D33/00 C; B65D65/40 D; C08J7/00 306; C08J7/043 Z CES; C08J7/048

According to International Patent Classification (IPC) or to both national classification and IPC

### B. FIELDS SEARCHED

Minimum documentation searched (classification system followed by classification symbols)

B32B27/32; B32B7/022; B32B7/027; B32B7/12; B32B27/00; B65D33/00; B65D65/40; C08J7/00; C08J7/043; C08J7/048

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2021/176948 A1 (TOPPAN PRINTING CO., LTD.) 10 September 2021 (2021-09-10) entire text | 1-14 |
| A | JP 2021-054078 A (DAI NIPPON PRINTING CO., LTD.) 08 April 2021 (2021-04-08) entire text | 1-14 |
| A | JP 2021-098373 A (DAI NIPPON PRINTING CO., LTD.) 01 July 2021 (2021-07-01) entire text | 1-14 |
| A | JP 2021-151787 A (DAI NIPPON PRINTING CO., LTD.) 30 September 2021 (2021-09-30) entire text | 1-14 |
| A | JP 2007-136736 A (DAI NIPPON PRINTING CO., LTD.) 07 June 2007 (2007-06-07) entire text | 1-14 |

☐ Further documents are listed in the continuation of Box C.          ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **19 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

EP 4 663 406 A1

## INTERNATIONAL SEARCH REPORT
### Information on patent family members

International application No.

**PCT/JP2024/004176**

| Patent document cited in search report | | | Publication date (day/month/year) | Patent family member(s) | | | Publication date (day/month/year) |
|---|---|---|---|---|---|---|---|
| WO | 2021/176948 | A1 | 10 September 2021 | US | 2023/0087185 | A1 | |
| | | | | EP | 4101639 | A1 | |
| | | | | CN | 115175815 | A | |
| JP | 2021-054078 | A | 08 April 2021 | US | 2022/0402250 | A1 | |
| | | | | EP | 4039464 | A1 | |
| JP | 2021-098373 | A | 01 July 2021 | US | 2019/0240956 | A1 | |
| | | | | WO | 2018/021478 | A1 | |
| | | | | EP | 3492258 | A1 | |
| JP | 2021-151787 | A | 30 September 2021 | US | 2020/0047960 | A1 | |
| | | | | WO | 2018/181900 | A1 | |
| | | | | EP | 3603955 | A1 | |
| JP | 2007-136736 | A | 07 June 2007 | (Family: none) | | | |

Form PCT/ISA/210 (patent family annex) (July 2022)

**EP 4 663 406 A1**

**Patent documents cited in the description**

- JP 2005053223 A